(19) **Europäisches Patentamt**

**European Patent Office**

**Office européen des brevets**

(11) **EP 1 536 417 A2**

(12) **EUROPEAN PATENT APPLICATION**

(43) Date of publication:
**01.06.2005 Bulletin 2005/22**

(51) Int Cl.⁷: **G11B 7/125**, G11B 15/087

(21) Application number: **04026050.7**

(22) Date of filing: **03.11.2004**

| | |
|---|---|
| (84) Designated Contracting States:<br>**AT BE BG CH CY CZ DE DK EE ES FI FR GB GR**<br>**HU IE IS IT LI LU MC NL PL PT RO SE SI SK TR**<br>Designated Extension States:<br>**AL HR LT LV MK YU** | (72) Inventors:<br>• **Akiyama, Tetsuya**<br>  **Hirakata city Osaka 573-0084 (JP)**<br>• **Miyagawa, Naoyasu**<br>  **Kawanishi city Hyogo 666-0004 (JP)** |
| (30) Priority: **28.11.2003 JP 2003399053** | (74) Representative: **Eisenführ, Speiser & Partner** |
| (71) Applicant: **MATSUSHITA ELECTRIC INDUSTRIAL**<br>**CO., LTD.**<br>**Kadoma-shi, Osaka 571-8501 (JP)** | **Patentanwälte Rechtsanwälte**<br>**Postfach 10 60 78**<br>**28060 Bremen (DE)** |

(54) **Method and device for recording information on optical recording medium and the medium itself**

(57)     A method for recording information on an optical information recording medium having a plurality of recording layers for recording, reproducing or erasing data by irradiating a laser beam from one side, includes a temporary pulse condition determination step, a test area reflected light measurement step, a final pulse condition determination step and a recording execution step. The temporary pulse condition determination step includes performing test recordings on a test recording layer that is at least one recording layer among a plurality of recording layers and determining a temporary pulse condition including a laser beam intensity. The test area reflected light measurement step includes measuring a test area reflected light level that is a reflected light level of the laser beam in an area for the test recording. The final pulse condition determination step includes correcting the temporary pulse condition in accordance with the measured test area reflected light level so as to determine a final pulse condition. The recording execution step includes recording data with the final pulse condition.

## Description

BACKGROUND OF THE INVENTION

1. Field of the Invention

The present invention relates to a method and device for recording information on an optical information recording medium that has a plurality of recording layers for recording and reproducing information by irradiation with a laser beam or the like. The present invention also relates to the optical information recording medium.

2. Description of the Prior Art

Of memories having large capacities and high densities, there is an optical information recording medium. Among the optical information recording medium, there is a rewritable and erasable type having a thin film on the substrate, the thin film acting as a recording layer which changes between an amorphous state and crystalline state upon generation of thermal energy from irradiation with a laser beam, for recording and erasing information.

As a phase change material for this recording layer, an alloy film containing Ge, Sb, Te, In or the like as a major component, for example a GeSbTe alloy, is known. Recording of information is performed by making a part of the recording layer amorphous so as to form a recording mark. Erasing of information is performed by making the recording mark crystalline. The amorphous state is formed by heating the recording layer to a temperature above the melting point and then cooling it rapidly. The crystalline state is formed by heating the recording layer to a temperature above the crystallization temperature and below the melting point.

In addition, it is common to provide a spiral guide groove or concentric guide grooves on the substrate for tracking the laser beam when recording or reproducing information. An area between neighboring grooves is called a land, and it is common, that one of the groove and the land is completed as an information track for recording information and the other is completed as a guard band for separating neighboring information tracks. This method is also completed in a recordable compact disk (CD-R) and a mini disc (MD).

As a method for recording information on a medium, there is a mark length recording method in which the length of a mark and the length of a space (namely, positions of a leading edge and a trailing edge of a mark) carry information, and marks are formed of different lengths with different spaces.

With this mark length recording method, caution must be given to the following points. Namely, if a pulse condition such as intensity or generation timing of a laser pulse is not appropriate when recording information, the shape of a mark can be distorted such that the front portion becomes thin and the rear portion becomes thick. This is because heat generated at the front portion affects the temperature rise at the rear portion. Or, the position of a mark edge can fluctuate due to the influence of heat generated when forming a neighboring mark, resulting in deterioration of signal quality.

The optimal pulse condition depends mainly on characteristics of the medium and recording and reproducing device. Therefore, a 'teaching' operation is necessary in which a medium is placed in the recording and reproducing device while recording information for determining the optimal pulse condition, every time it is activated. This teaching operation enables determination of an optimal pulse condition by performing test recordings while changing the pulse condition and by comparing the qualities of reproduced signals with each other.

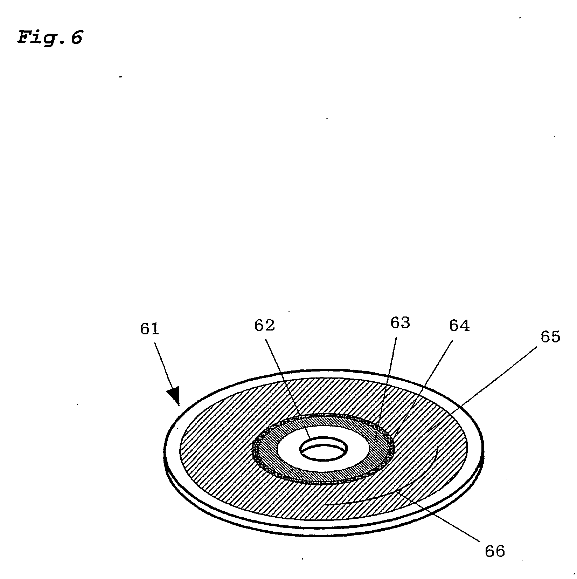

An example of a conventional optical information recording medium is shown in Fig. 6. As shown in Fig. 6, the optical information recording medium 61 includes a transparent substrate made of polycarbonate having a thickness of 1.1 mm, a center hole 62 for being placed on a recording and reproducing device, a recording layer disposed on the substrate, and a protection layer having a thickness of 0.1 mm. The optical information recording medium 61 is irradiated with a laser beam through the protection layer for recording and reproducing information. The substrate is provided with a track 66 for tracking the laser beam when recording and reproducing information. In addition, the optical information recording medium 61 includes a lead-in area 63 in which identifying information of the medium is recorded by embossed pits or the like to be completed only for reproduction, a test recording area 64 for performing the teaching operation for determining the optimal pulse condition, and an information recording area 65 in which user data is recorded.

On the other hand, the quantity of information to be handled has increased recently along with the improvement of processing abilities of various information technology devices. For this reason, a recording medium that has a larger capacity and supports higher recording and reproducing speeds is required. In order to satisfy this larger capacity, a multilayered recording medium is proposed that has a plurality of recording layers and information can be recorded and reproduced on each recording layer from one side. Such a multilayered recording medium has different recording and reproducing characteristics such as the intensity of the optimal laser pulse for recording information for each of the recording layers. Therefore, a conventional recording and reproducing device performs the teaching operation for each of the recording layers (see Japanese unexamined patent publication No. 11-3550, for example).

In this multilayered recording medium, recording and reproduction of information on each recording layer, except for the recording layer'proximal to the laser source, is performed by the laser beam after passing through one or more recording layers at the laser source side. However, transmittance of light is different between the amorphous state and the crystalline state depending on the material of the recording layer, so the transmittance of the laser beam in each recording layer varies depending on whether information has been recorded or not.

Therefore, the intensity of the laser beam that reaches the recording layer on which information is actually recorded or reproduced varies depending on the recording state of the previous recording layer. Accordingly, user data cannot be recorded correctly if they are recorded with a pulse condition that is determined by the teaching operation in accordance with the conventional method.

In addition, a pulse condition cannot be obtained in the teaching operation because the intensity of the laser beam that reaches the recording layer on which the teaching operation is actually performed for the test recording varies depending on the recording state of the previous recording layer.

SUMMARY OF THE INVENTION

An object of the present invention is to provide a method and device for recording information in which a pulse condition can be determined correctly by a teaching operation and user data can be recorded correctly, regardless of the information recording state of each recording layer.

A method according to a first aspect of the present invention is for recording information on an optical information recording medium having a plurality of recording layers for recording, reproducing or erasing data by irradiating a laser beam from one side. The method includes a temporary pulse condition determination step, a test area reflected light measurement step, a final pulse condition determination step and a record execution step. The temporary pulse condition determination step is for determining a temporary pulse condition including intensity of the laser beam by performing a test recording on a test recording layer that is at least one recording layer of the plurality of recording layers. The test area reflected light measurement step is for measuring a test area reflected light level that is a reflected light level of the laser beam in an area in which the test recording is performed. The final pulse condition determination step is for determining a final pulse condition by correcting the temporary pulse condition in accordance with the measured test area reflected light level. The record execution step is for recording data with the final pulse condition.

According to the recording method of the present invention, the temporary pulse condition determined by the test recording is corrected in accordance with the test area reflected light level so as to determine the final pulse condition. The correction in accordance with the test area reflected light level is performed, for example, so that a recording state of information on each recording layer is compensated for. Thus, a correct pulse condition can be determined by a teaching operation, regardless of the recording state of information in each recording layer, and user data can be recorded correctly.

According to the recording method of a second aspect of the present invention, the test area reflected light measurement step includes measuring the reflected light level at one of an unused portion, an intermark portion and an information erased portion in the area in which the test recording is performed.

It has been found by the present inventors that a signal having substantially the same high level of reflected light is obtained at the unused portion, the intermark portion and the information erased portion.

According to the recording method of a third aspect of the present invention, the method further includes a reference reflected light level measurement step for measuring a reflected light level of the laser beam in the test recording layer. The reference reflected light level measurement step measures a reference reflected light level that is a reflected light level in a radial position where data is not recorded on a recording layer which is closer to a laser beam incident side than the test recording layer. The final pulse condition determination step includes determining the final pulse condition by correcting the temporary pulse condition in accordance with the reference reflected light level and the test area reflected light level.

According to the recording method of the present invention, the temporary pulse condition is corrected in accordance with the reference reflected light level and the test area reflected light level. Therefore, it is possible to compensate for the influence of the recording state of the recording layer at the laser beam incident side upon the temporary pulse condition.

According to the recording method of a fourth aspect of the present invention, the method further includes a correction coefficient obtaining step for obtaining a correction coefficient that indicates a difference of laser beam transmittance of the recording layer at the laser beam incident side between a recorded state and a non-recorded state. The final pulse condition determination step includes determining the final pulse condition by correcting the temporary pulse condition in accordance with the correction coefficient, the reference reflected light level and the test area reflected light level.

According to the recording method of the present invention, the correction coefficient is further used for correcting the pulse condition. Therefore, it is possible to compensate for the influence of the recording state of the recording layer at the laser beam incident side while recording information.

According to the recording method of a fifth aspect of the present invention, the correction coefficient obtaining step includes obtaining the correction coefficient by reading the correction coefficient that is recorded at a specific position of the optical information recording medium in advance.

According to the recording method of the present invention, the correction coefficient is recorded at a specific position of the optical information recording medium. Therefore, it is possible to determine the pulse condition by using an appropriate correction coefficient in accordance with characteristics of the optical information recording medium.

According to the recording method of a sixth aspect of the present invention, the final pulse condition determination step includes an effective pulse condition determination step and an effective pulse condition correction step. The effective pulse condition determination step is for determining an effective pulse condition including intensity of the laser beam that is appropriate when the recording layer at the laser beam incident side is in the non-recorded state by correcting the temporary pulse condition in accordance with the reference reflected light level and the test area reflected light level. The effective pulse condition correction step is for correcting the effective pulse condition in accordance with the correction coefficient so as to determine the final pulse condition.

According to the recording method of the present invention, it is possible to determine the effective pulse condition by compensating for the influence of the recording state of a recording layer at the laser beam incident side upon the temporary pulse condition. Furthermore, it is possible to determine the final pulse condition by correcting the effective pulse condition by using an appropriate correction coefficient in accordance with characteristics of the optical information recording medium.

According to the recording method of a seventh aspect of the present invention, the method further includes a completed recording layer information obtaining step for reading completed recording layer information that specifies a completed recording layer on which data is already recorded from the optical information recording medium. The correction coefficient obtaining step is a step for reading the correction coefficient (which corresponds to (i) target recording layer information that specifies one of the plurality of recording layers of the optical information recording medium, and (ii) recording layer specifying information that specifies one of recording layers closer to the laser beam incident side than the recording layer indicated by the target recording layer information) from the optical information recording medium. The correction coefficient obtaining step obtains the correction coefficient corresponding to the target recording layer information that indicates the recording layer on which the data recording is performed, and the recording layer specifying information that coincides with the completed recording layer information.

According to the recording method of the present invention, it is decided how many recording layers have recording of information completed among the recording layers closer to the laser beam incident side than the recording layer on which user data is to be recorded. Furthermore, a correction coefficient that is suitable for the recording state is selected. Therefore, it is possible to determine a more appropriate pulse condition and to record user data more securely.

According to the recording method of an eighth aspect of the present invention, the completed recording layer information further includes completed address information that indicates a position of a completed area in the completed recording layer.

Here, the completed address information can be an address that indicates the position of an area where data is already recorded or an address that specifies a final position of an area where user data is already recorded if the recording is performed successively on a recording layer (i.e., if no uncompleted area remains for recording user data on any recording layer, another recording layer is used successively for the recording).

According to the recording method of the present invention, it is possible to read the completed address information before recording new user data, so as to select a correction coefficient in accordance with the position of the completed area and the position where user data is to be recorded.

According to the recording method of a ninth aspect of the present invention, the correction coefficient obtaining step includes deciding a position of the completed area on the completed recording layer in accordance with the completed address information that is read out of the optical information recording medium, and selecting the correction coefficient in accordance with the position of the completed area and a position where data is recorded.

According to the recording method of a tenth aspect of the present invention, the method further includes a user area reflected light measurement step for measuring a user area reflected light level that is a reflected light level of the laser beam in an information recording area in which data is recorded. The final pulse condition determination step includes determining the final pulse condition by correcting the temporary pulse condition in accordance with the user area reflected light level, the reference reflected light level and the test area reflected light level.

According to the recording method of the present invention, the test area reflected light level and the reference reflected light level are used for the correction. Therefore, it is possible to compensate for the influence of the recording state of the recording layer at the laser beam incident side upon the temporary pulse condition, for example. Furthermore, the user area reflected light level and the reference reflected light level are used for the correction. Therefore, it is possible to compensate for the influence of the recording state of the recording layer at the laser beam incident side when recording information.

According to the recording method of an eleventh aspect of the present invention, the final pulse condition determination step includes an effective pulse condition determination step and an effective pulse condition correction step. The effective pulse condition determination step is for determining an effective pulse condition including intensity of the laser beam that is appropriate when the recording layer at the laser beam incident side is in the non-recorded state by correcting the temporary pulse condition in accordance with the reference reflected light level and the test area reflected light level. The effective pulse condition correction step is for correcting the effective pulse condition in accordance with the user area reflected light level and the reference reflected light level and determining the final pulse condition.

According to the recording method of the present invention, it is possible to determine an effective pulse condition while compensating for the influence of the recording state of the recording layer at the laser beam incident side upon the temporary pulse condition. Furthermore, it is possible to determine a final pulse condition by correcting the effective pulse condition so as to compensate for the influence of the recording state of the recording layer at the laser beam incident side when information is recorded.

According to the recording method of a twelfth aspect of the present invention, the user area reflected light measurement step includes measuring the user area reflected light level at a predetermined time interval while data is recorded or at every predetermined radial position on the optical information recording medium.

According to the recording method of the present invention, the recording state of a recording layer at the laser beam incident side can be compensated for more appropriately when recording information.

According to the recording method of a thirteenth aspect of the present invention, the temporary pulse condition determination step includes a signal quality evaluation step and a temporary pulse condition setting step. The signal quality evaluation step is for performing test recordings while changing the intensity of the laser beam in the test recording layer, reproducing the test-recorded signal, measuring one of an amplitude, a degree of modulation, a jitter value and an error rate of the reproduced signal, and evaluating quality of the reproduced signal. The temporary pulse condition setting step is for setting the intensity of the laser beam to a value close to the maximum value that satisfies a predetermined quality criterion of the reproduced signal for a medium with a recording layer at the laser beam incident side in which laser beam transmittance is decreased when data is recorded on a recording layer closer to the laser beam incident side than the test recording layer and setting the intensity of the laser beam to a value close to the minimum value that satisfies a predetermined quality criterion for a medium with a recording layer at the laser beam incident side in which laser beam transmittance is increased when data is recorded on a recording layer closer to the laser beam incident side than the test recording layer.

According to the recording method of the present invention, it is possible to determine a temporary pulse condition so that the quality of the reproduced signal satisfies a predetermined criterion, regardless of the recording state of a recording layer at the laser beam incident side.

According to the recording method of a fourteenth aspect of the present invention, the method further includes a transmittance change information obtaining step for reading transmittance change information from the optical information recording medium. The transmittance change information indicates whether the laser beam transmittance increases or decreases by recording data on the recording layer. The temporary pulse condition setting step includes obtaining the transmittance change information and deciding a trend of the transmittance change.

According to the recording method of the present invention, the transmittance change information is recorded on the optical information recording medium in advance. Therefore, it is possible to determine a pulse condition by choosing appropriate transmittance change information in accordance with the characteristics of the optical information recording medium.

A method according to a fifteenth aspect of the present invention is for recording information on an optical information recording medium having a plurality of recording layers for recording, reproducing or erasing data by irradiating a laser beam from one side. The method includes a laser beam intensity information obtaining step, a test recording step and a recording execution step. The laser beam intensity information obtaining step is for reading laser beam intensity information from the optical information recording medium, the laser beam intensity information indicating a maximum value of laser beam intensity for recording data on at least one recording layer or being used for calculating the maximum value. The test recording step is for performing a test recording within a range of laser beam intensities less than the maximum value obtained from the laser beam intensity information. The recording execution step is for recording data with a pulse condition determined on the basis of the test recording.

It has been found by the present inventors that if excessive laser beam intensity is used for recording information, the transmittance change increases in the recording layer on which information is recorded.

According to the recording method of the present invention, it is possible to suppress the transmittance change in the test recording area of the recording layer, so as to reduce the influence upon recording on a recording layer at the rear side.

A device according to a sixteenth aspect of the present invention is for recording information on an optical information recording medium having a plurality of recording layers for recording, reproducing or erasing data by irradiating a laser beam from one side. The device includes a test recording unit, a reflected light level measurement unit and a final pulse condition determination unit. The test recording unit is for determining a temporary pulse condition including intensity of the laser beam by performing a test recording on a test recording layer that is at least one recording layer of the plurality of recording layers. The reflected light level measurement unit is for measuring a reflected light level of the laser beam from the recording layer. The final pulse condition determination unit is for determining a final pulse condition that is used for recording data by correcting the temporary pulse condition (determined by the test record unit) in accordance with a test area reflected light level that is measured by the reflected light level measurement unit as a reflected light level of the laser beam in an area where the test recording is performed and a reference reflected light level that is measured by the reflected light level measurement unit as a reflected light level in a radial position where data is not recorded, on a recording layer closer to a laser beam incident side than the test recording layer.

According to the recording device of the present invention, the temporary pulse condition determined by the test recording is corrected by the test area reflected light level and the reference reflected light level, so as to determine the final pulse condition. Therefore, it is possible to compensate for the influence of the recording state of each recording layer at the laser beam incident side upon the temporary pulse condition. Thus, it is possible to determine a correct pulse condition by the teaching operation and to record user data correctly, regardless of the recording state of information on each recording layer.

According to the recording device of a seventeenth aspect of the present invention, the device further includes a correction coefficient obtaining unit for obtaining a correction coefficient that indicates a difference of laser beam transmittance of the recording layer between a recorded state and a non-recorded state. The final pulse condition determination unit further uses the correction coefficient for correcting the temporary pulse condition and determines the final pulse condition.

According to the recording device of the present invention, the correction coefficient is further used for correcting the pulse condition. Therefore, it is possible to compensate for the influence of the recording state of a recording layer at the laser beam incident side when recording information.

According to the recording device of an eighteenth aspect of the present invention, the device further includes a completed recording layer obtaining unit for obtaining completed recording layer information that specifies a completed recording layer on which data is already recorded. The final pulse condition determination unit further uses the completed recording layer information for correcting the temporary pulse condition so as to determine the final pulse condition.

According to the recording device of the present invention, it is decided how many recording layers already have the recording of information completed among the recording layers closer to the laser beam incident side than the recording layer on which user data is to be recorded. For this reason, it is possible to determine a more appropriate pulse condition and to record user data more securely.

According to the recording device of a nineteenth aspect of the present invention, the correction coefficient obtaining unit is an unit for reading the correction coefficient from the optical information recording medium, the correction coefficient corresponding to: (i) target recording layer information for specifying one of the plurality of recording layers of the optical information recording medium; and (ii) recording layer specifying information for specifying one of the recording layers closer to the laser beam incident side than the recording layer indicated by the target recording layer information. The correction coefficient obtaining unit obtains the correction coefficient that corresponds to target recording layer information that indicates the recording layer on which data is recorded and to recording layer specifying information that coincides with the completed recording layer information.

According to the recording device of the present invention, it is decided how many recording layers already have the recording of information completed among the recording layers closer to the laser beam incident side than the recording layer on which user data is to be recorded. Furthermore, a correction coefficient suitable for the recording state is selected. Therefore, it is possible to determine a more appropriate pulse condition and to record user data more securely.

According to the recording device of a twentieth aspect of the present invention, the completed recording layer information further includes completed address information that indicates a position of a completed area in the completed recording layer.

According to the recording device of a twenty-first aspect of the present invention, the correction coefficient obtaining unit decides the position of the completed area on the completed recording layer from the completed address information that is read from the optical information recording medium, and selects the correction coefficient in accordance with the position of the completed area and the position where data is recorded.

According to the recording device of the present invention, it is possible to read completed address information before new user data is recorded, so as to select a correction coefficient in accordance with the position of the completed area and the position where user data is to be recorded.

According to the recording device of a twenty-second aspect of the present invention, the test recording unit includes signal quality evaluation unit for measuring one of an amplitude, a degree of modulation, a jitter value and an error rate of a reproduced signal so as to evaluate the quality of the signal.

According to the recording device of a twenty-third aspect of the present invention, the final pulse condition includes intensity, pulse length and generation timing of the laser beam that are set corresponding to a length and/or an interval of marks to be recorded.

According to the recording device of a twenty-fourth aspect of the present invention, the test recording unit includes a signal quality evaluation unit and a temporary pulse condition setting unit. The signal quality evaluation unit is for performing test recordings while changing the intensity of the laser beam on the test recording layer, reproducing the test-recorded signal, and evaluating the quality of the reproduced signal. The temporary pulse condition setting unit is for: (i) setting the intensity of the laser beam to a value close to the maximum value that satisfies a predetermined quality criterion of the reproduced signal for a medium with a recording layer at the laser beam incident side in which laser beam transmittance is decreased when data is recorded on a recording layer closer to the laser beam incident side than the test recording layer; and (ii) setting the intensity of the laser beam to a value close to the minimum value that satisfies a predetermined quality criterion for a medium with a recording layer at the laser beam incident side in which laser beam transmittance is increased when data is recorded on a recording layer closer to the laser beam incident side than the test recording layer.

According to the recording device of the present invention, it is possible to determine a temporary pulse condition so that the quality of the reproduced signal satisfies a predetermined criterion, regardless of the recording state of a recording layer at the laser beam incident side.

According to the recording device of a twenty-fifth aspect of the present invention, the signal quality evaluation unit measures one of an amplitude, a degree of modulation, a jitter value and an error rate of the reproduced signal so as to evaluate the quality of the signal.

According to the recording device of a twenty-sixth aspect of the present invention, the final pulse condition includes an intensity, a pulse length and a generation timing of the laser beam that are set corresponding to a length and/or an interval of marks to be recorded.

According to the recording device of a twenty-seventh aspect of the present invention, the device further includes a transmittance change information obtaining unit for reading transmittance change information from the optical information recording medium. The transmittance change information indicates whether the laser beam transmittance increases or decreases by recording data on the recording layer. The temporary pulse condition setting unit obtains the transmittance change information and decides a trend of the transmittance change.

According to the recording device of the present invention, transmittance change information that is recorded on the optical information recording medium in advance is obtained. Therefore, it is possible to determine a pulse condition by using appropriate transmittance change information in accordance with characteristics of the optical information recording medium.

An optical information recording medium according to a twenty-eighth aspect of the present invention has a plurality of recording layers for recording, reproducing or erasing data by irradiating a laser beam from one side, in which the medium stores a correction coefficient that indicates a difference of a laser beam transmittance of the recording layer between a recorded state and a non-recorded state.

According to the optical information recording medium of the present invention, it is possible to give a correction coefficient to a recording device so as to compensate for the influence of the recording state of a recording layer at the laser beam incident side when recording information.

According to the optical information recording medium of a twenty-ninth aspect of the present invention, the correction coefficient is stored in a lead-in area.

According to the optical information recording medium of the present invention, the correction coefficient is stored in a lead-in area so that an area for recording user data can be secured.

According to the optical information recording medium of a thirtieth aspect of the present invention, the correction coefficient is stored corresponding to; (i) target recording layer information that specifies one of the plurality of recording layers of the optical information recording medium and (ii) recording layer specifying information that specifies one of the recording layers closer to a laser beam incident side than the recording layer indicated by the target recording layer information.

According to the optical information recording medium of a thirty-first aspect of the present invention, the medium further stores completed recording layer information for specifying a completed recording layer on which data is already recorded.

The optical information recording medium of the present invention gives completed recording layer information to a recording device so that the influence of the recording state of a recording layer at the laser beam incident side can be compensated for when recording information.

According to the optical information recording medium of a thirty-second aspect of the present invention, the completed recording layer information includes completed address information that indicates a position of the completed area on the completed recording layer.

The optical information recording medium of the present invention gives completed recording layer information to a recording device so that completed address information can be read before recording new user data and a correction coefficient can be selected in accordance with the position of the completed area and the position where user data is to be recorded.

An optical information recording medium according to a thirty-third aspect of the present invention has a plurality of recording layers for recording, reproducing or erasing data by irradiating a laser beam from one side, in which the medium stores a transmittance change information that indicates whether a laser beam transmittance increases or decreases when data is recorded on the recording layer.

The optical information recording medium of the present invention gives transmittance change information to a recording device so that appropriate transmittance change information can be used for determining a pulse condition in accordance with the characteristics of the optical information recording medium.

An optical information recording medium according to a thirty-fourth aspect of the present invention has a plurality of recording layers for recording, reproducing or erasing data by irradiating a laser beam from one side, in which the medium stores laser beam intensity information that indicates a maximum value of a laser beam intensity when data is recorded on at least one recording layer or that is used for calculating the maximum value.

It has been found by the present inventors that if excessive laser beam intensity is used for recording information, the transmittance change increases in the recording layer on which information is recorded.

The optical information recording medium of the present invention gives information that indicates the maximum value of laser beam intensity, or information for calculating the maximum value, to a recording device so that a transmittance change in the recording state of the recording layer can be suppressed and the influence upon recording on a recording layer at the rear side can be reduced.

According to a method and a device of the present invention, for recording information, it is possible to determine a correct pulse condition by a teaching operation and to record user data correctly on an optical information recording medium that has a plurality of recording layers for recording, reproducing or erasing information by irradiating a laser beam from one side, regardless of the recording state of information on each recording layer, even if laser beam transmittance of the recording layer varies depending on whether information is recorded or not.

BRIEF DESCRIPTION OF THE DRAWINGS

Fig. 1 is a cross sectional view showing an example of an optical information recording medium to which a method for recording and reproducing information is applied according to the first embodiment of the present invention.

Fig. 2 is a cross sectional view showing a main portion in an example of an optical information recording medium to which a method for recording and reproducing information is applied according to the first embodiment of the present invention.

Fig. 3 is a cross sectional view showing an example of an optical information recording medium to which a method for recording and reproducing information is applied according to the second embodiment of the present invention.

Fig. 4 is a block diagram showing a structure according to a recording and reproducing device of the present invention.

Fig. 5 is a flowchart showing a method for recording and reproducing information according to the present invention.

Fig. 6 is a perspective view showing a conventional optical information recording medium.

Fig. 7 is a graph showing the quality of a test-recorded signal according to a method of the present invention for recording and reproducing information.

Fig. 8 is a graph showing the quality of the test-recorded signal according to a method of the present invention for recording and reproducing information.

Fig. 9 shows a waveform of a reflected light level signal in the recording and reproducing device of the present invention.

DESCRIPTION OF THE PREFERRED EMBODIMENTS

Hereinafter, embodiments of the present invention will be described with reference to the attached drawings.

(First Embodiment)

(Structure and Operation)

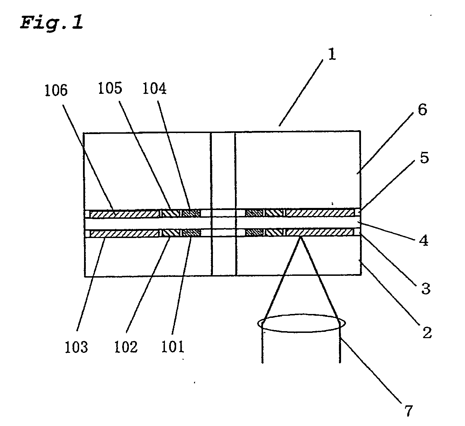

Fig. 1 is a cross sectional view showing an example of an optical information recording medium to which a method for recording and reproducing information is applied according to a first embodiment of the present invention. As shown in Fig. 1, the recording medium 1 includes a substrate 6 made of polycarbonate having a thickness of approximately 1.1 mm, on which a first recording layer 5, a transparent separation layer 4 having a thickness of approximately 0.025 mm, a second recording layer 3 that is a translucent layer having a thickness of approximately 100 nm and a protection film 2 having a thickness of approximately 0.075 mm are formed sequentially. The recording layers 3 and 5 are provided with information tracks (not shown) having a depth of approximately 20 nm and a width of approximately 0.2 μm at a pitch of approximately 0.32 μm for tracking a laser beam 7 when recording or reproducing information. The laser beam 7 is irradiated from the side of the recording layer 3.

The recording layer 3 includes: a lead-in area 101 for reproducing purposes that is provided at a radial position within the range of approximately 22-23 mm, for recording identifying information or the like of the medium by wobbling on the information track; a test recording area 102 that is provided at a radial position within the range of approximately 23-24 mm for a teaching operation for determining an optimal pulse condition; and an information recording area 103 that is provided at a radial position within the range of approximately 24-58 mm for recording user data. In addition, the recording layer 5 includes: a lead-in area 104 for reproducing purposes that is provided at a radial position within the range of approximately 22-23 mm for recording identifying information or the like of the medium by wobbling on the information track; a test recording area 105 that is provided at a radial position within the range of approximately 23-24 mm for a teaching operation for determining an optimal pulse condition; and an information recording area 106 that is provided at a radial position within the range of approximately 24-58 mm for recording user data, similarly to the recording layer 3.

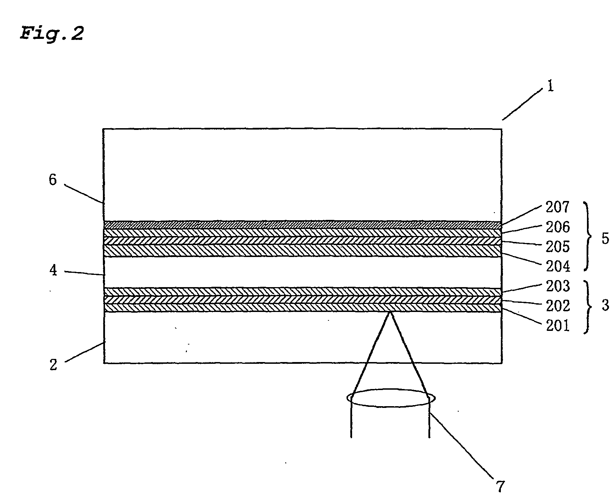

A more detailed structure of the recording medium 1 is shown in Fig. 2. As shown in Fig. 2, the recording layer 3 has a multilayered thin film structure including a protection layer 201 made of a dielectric material, a phase change layer 202 made of a thin film containing Sb and Te as major components, and a protection layer 203 made of a dielectric material. In this embodiment, when recording information, a part of the phase change layer 202 is changed from a crystalline state to an amorphous state so that the transmittance of the recording layer 3 decreases for a wavelength of the laser beam 7.

The recording layer 5 has a multilayered thin film structure including a protection layer 204 made of a dielectric material, a phase change layer 205 made of a thin film containing Sb and Te as major components, a protection layer 206 made of a dielectric material and a reflection layer 207 made of a metal material.

A correction coefficient $\alpha$ that indicates a decrease of transmittance of the recording layer 3 due to the recording of information is recorded in the lead-in area 104 shown in Fig. 1. The correction coefficient $\alpha$ is defined by the following equation.

$$\alpha = T1/T2$$

Here, T1 represents the transmittance of the recording layer 3 before recording information, and T2 represents the transmittance of the recording layer 3 after recording information, for example.

When using the recording medium 1, a recording and reproducing device is activated and reads the correction coefficient $\alpha$ that is recorded in the lead-in area 104, and it measures a reference reflected light level R1. Here, the reference reflected light level R1 means a reflected light level in the lead-in area 104, i.e., a reflected light level at a radial position of the first recording layer 5 that corresponds to the lead-in area 101, for reproducing purposes in which data is not recorded on the second recording layer 3 closer to a laser beam incident side than the first recording layer 5.

Next, in test recording areas 102 and 105 on the recording layers 3 and 5, test recordings are performed while changing a pulse condition such as intensity, length or generation timing of the laser pulse. Thus, the teaching operation is performed in which a temporary pulse condition is determined in accordance with a measurement result of the quality of the reproduced signal from them. Here, the teaching operation for determining the temporary pulse condition is an operation of determining a more appropriate pulse condition by performing test recordings while changing the pulse condition and comparing the measurement result of qualities of reproduced signals. And here, the conventional method can also be used.

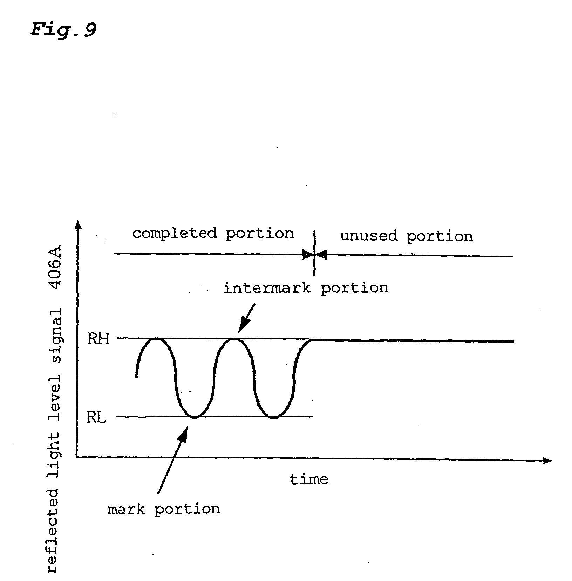

In addition, when performing the teaching operation on the recording layer 5, a reflected light level R2 in the test recording area 105 is measured. Fig. 9 shows a waveform of a reflected light level signal that is obtained in the test recording area. In the area where a signal is recorded, a signal is obtained that has intensity of a low reflected light level RL in a recording mark portion and a high reflected light level RH in an intermark portion, substantially the same as in an unused portion.

The reflected light level R2 in the test recording area 105 is obtained by measuring the level RH in Fig. 9. Note that it is possible to measure the level of the reflected light level R2 in the test recording area 105 after erasing the recorded information.

In order to record user data in the information recording area 103 on the recording layer 3, the temporary pulse condition determined in the test recording area 102 is used for the recording. Namely, the temporary pulse condition becomes the final pulse condition.

In addition, in order to record user data in the information recording area 106 on the recording layer 5, the laser beam intensity of the temporary pulse condition determined in the test recording area 105 is corrected by the reference reflected light level R1 in the lead-in area 104, the reflected light level R2 in the test recording area 105 and the correction coefficient $\alpha$ so as to obtain the final pulse condition for the recording.

More specifically, a laser beam level of the temporary pulse condition is corrected by the reflected light levels R1 and R2 in the lead-in area 104 and the test recording area 105, so as to determine an effective pulse condition that compensates for the influence of transmittance variation due to the completed state of the test recording area 102. Furthermore, a laser beam intensity of the effective pulse condition is corrected by the correction coefficient $\alpha$ so as to obtain the final pulse condition that is used for the recording.

Here, the effective pulse condition represents an optimal pulse condition of the recording layer 5 in a state in which the recording layer 3 is unrecorded. The reflected light level of the recording layer 5 is proportional to a square of the transmittance of the recording layer 3. In addition, the optimal laser beam intensity of the recording layer 5 is inversely proportional to the transmittance of the recording layer 3. Therefore, if the laser beam intensity of the temporary pulse condition determined in the test recording area 105 is P0, the laser beam intensity of the effective pulse condition is given as below.

$$P0 \times (R2/R1)^{(1/2)}$$

Furthermore, a laser beam intensity of the final pulse condition for recording user data in the information recording area 106 is given as below.

$$P0 \times (R2/R1)^{(1/2)} \times \alpha$$

Note that the correction coefficient $\alpha$ is not limited to the value given by the equation $\alpha = T1/T2$. It can be defined so that when information is recorded in the recording layer 5 by the final pulse condition where the recording layer 3 is the non-recorded state, i.e., the state with large transmittance, then a quality of the reproduced signal satisfies a certain criterion.

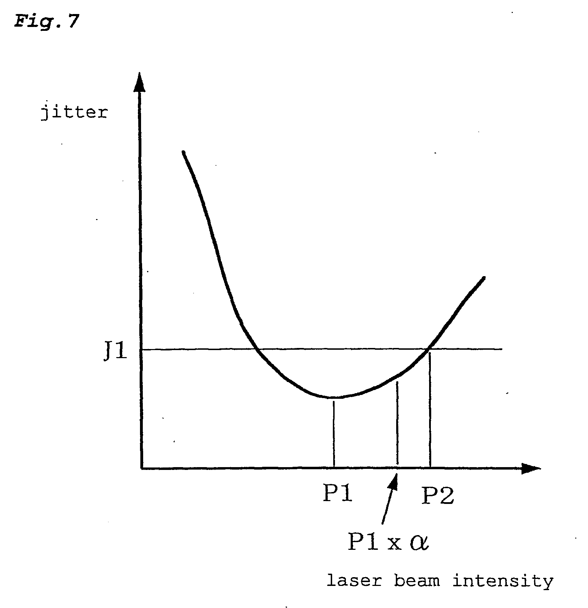

For example, if the laser intensity for the minimum jitter value is P1 and the maximum laser intensity for a jitter value. less than a reference value J1 is P2, like the relationship between the intensity of the laser pulse for the recording shown in Fig. 7 and jitter of the reproduced signal, the correction coefficient $\alpha$ can be determined within the range as shown below.

$$P1 \times \alpha < P2$$

Furthermore, if the laser beam intensity of the final pulse condition is larger than the maximum value of the laser beam intensity of the effective pulse condition in which quality of the reproduced signal satisfies a certain condition in the teaching operation, it is preferable to record user data by the pulse condition in which the laser beam intensity is close to the maximum value.

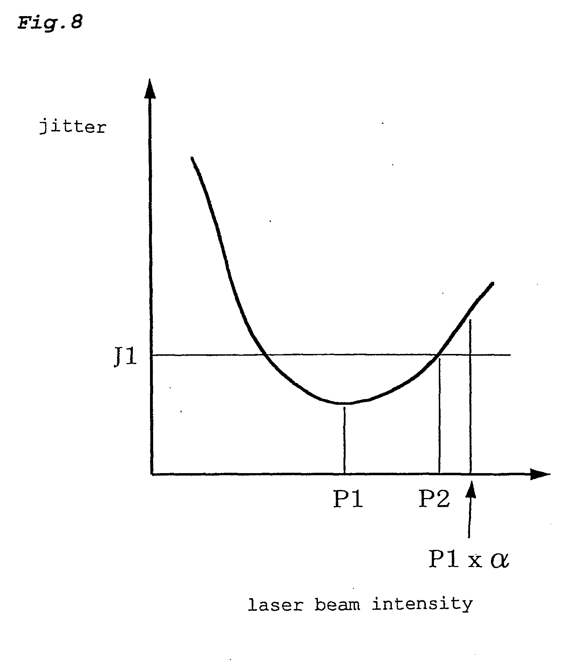

For example, if the laser intensity for the minimum jitter value is P1 and the maximum laser intensity for a jitter value less than a reference value J1 is P2 and the laser intensity of the final pulse condition is larger than P2, like the relationship between the intensity of the laser pulse of the effective pulse condition obtained by the real teaching operation shown in Fig. 8 and jitter of the reproduced signal, it is preferable to set the laser intensity for the recording to a value close to P2.

(Effects)

As described above, the laser beam intensity of the pulse condition (temporary pulse condition) obtained by the teaching operation in the test recording area 105 on the recording layer 5 is corrected by the reference reflected light level R1 in the lead-in area 104 and the reflected light level R2 in the test recording area 105, so that a pulse condition that is always constant (effective pulse condition) can be obtained, without being affected by the transmittance difference between the recorded state and the non-recorded state in the test recording area 102.

On the other hand, the recording layer 3 is not affected by the recording state of the recording layer 5 because it is closer to the laser beam incident side than the recording layer 5. Therefore, a constant pulse condition is obtained in the teaching operation in the test recording area 102 of the recording layer 3.

In addition, when user data is recorded in the information recording area 106 on the recording layer 5, a decrease of recording sensitivity in the recording layer 5 due to the completed state of the recording layer 3 can be compensated for by using the correction coefficient $\alpha$ so that user data can be recorded correctly.

As described above, even if laser beam transmittance of a recording layer varies depending on whether information is recorded or not, the correct pulse condition can be determined regardless of the recording state of information in each recording layer by the teaching operation, and user data can be recorded correctly.

(Variations)

Note that the measurement of the reference reflected light level of the recording layer 5 may also be performed in a reflectance reference area that is provided separately from the lead-in area 104. In this case, the lead-in area may be disposed either on the recording layer 3 or on the recording layer 5. Also, information of the lead-in area may be recorded by embossed pits.

Furthermore, in the teaching operation, the optimal pulse condition may be determined by performing test recordings while changing recording and reproducing conditions and by comparing the measurement results of qualities of reproduced signals with each other. Alternatively, simpler methods may be used for determining the temporary pulse condition. One of the simpler methods is, for example, comparing the measurement result of the quality of the reproduced signal with a predetermined condition at any time. When the measurement result satisfies the predetermined condition, the pulse condition at that time is regarded as the temporary pulse condition. In this case, it is preferable to measure the quality of the reproduced signal by measuring the jitter value of the reproduced signal (the variation of the position of the reproduced signal with respect to a clock to be a reference signal), the error rate of the data, the amplitude of the reproduced signal or the degree of modulation.

In addition, although the situation where the transmittance of the recording layer 3 decreases when information is recorded is described in this embodiment, the same effect can also be obtained where the transmittance of the recording layer 3 increases when information is recorded. Here, if the laser beam intensity of the final pulse condition is less than a minimum value of the laser beam intensity of the effective pulse condition such that the quality of the reproduced signal satisfies a certain condition in the teaching operation, it is preferable to record user data by the pulse condition in which the laser beam intensity is set to a value close to the minimum value.

Furthermore, it is possible to record transmittance change information on the recording medium instead of the correction coefficient $\alpha$. The transmittance change information indicates whether the transmittance decreases or increases when information is recorded on the recording layer 3. By reading this transmittance change information, it can be decided whether the transmittance decreases or increases when information is recorded on the recording layer 3.

In accordance with this information, user data is recorded with the effective pulse condition in which the intensity of the laser beam is set to a value close to a maximum value such that the quality of the test-recorded signal on the recording layer 5 satisfies a predetermined criterion for a medium having a decreasing transmittance, while user data is recorded with the effective pulse condition in which the intensity of the laser beam is set to a value close to a minimum value such that the signal quality satisfies the predetermined criterion for a medium having an increasing transmittance.

Thus, when user data is recorded in the information recording area 106 on the recording layer 5, a variation of the recording sensitivity of the recording layer 5 due to the completed state of the recording layer 3 can be compensated for so that the user data can be recorded correctly.

Note that it is preferable to measure a reflected light level of a portion in which the signal quality satisfies a predetermined decision criterion, i.e., a portion in which information is recorded by an appropriate pulse condition when measuring the reflected light level in the test recording area where a signal is recorded.

(Second Embodiment)

(Structure and Operation)

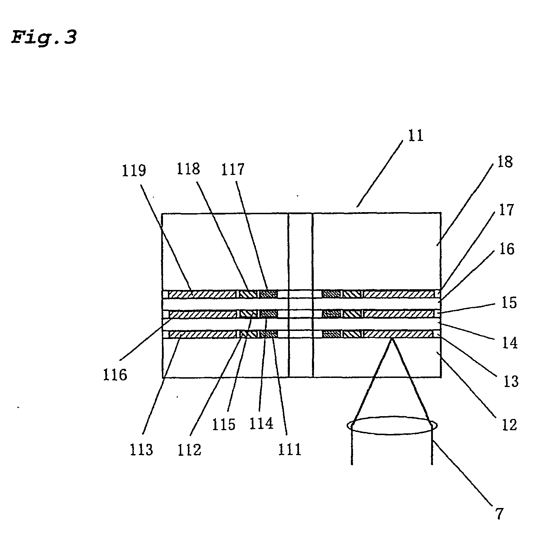

Fig. 3 is a cross sectional view showing an example of an optical information recording medium to which a method for recording and reproducing information is applied according to a second embodiment of the present invention. As shown in Fig. 3, the recording medium 11 includes a substrate 18 made of polycarbonate having a thickness of approximately 1.1 mm, on which: a first recording layer 17; a transparent separation layer 16 having a thickness of approximately 0.02 mm; a second recording layer 15 that is a translucent layer having a thickness of approximately 100 nm; a transparent separation layer 14 having a thickness of approximately 0.02 mm; a third recording layer 13 that is a translucent layer having a thickness of approximately 100 nm; and a protection film 12 having a thickness of approximately 0.06 mm, are formed sequentially. The recording layers 13, 15 and 17 are provided with information tracks (not shown) having a depth of approximately 20 nm and a width of approximately 0.2 $\mu$m at a pitch of approximately 0.32 $\mu$m, for tracking a laser beam 7 when recording or reproducing information. The laser beam 7 is irradiated from the side of the recording layer 13.

Each of the recording layers 13, 15 and 17 include a lead-in area 111, 114 or 117 for reproducing purposes that is provided at a radial position within the range of approximately 22-23 mm from the center for recording identifying information or the like of the medium by wobbling on the information track, a test recording area 112, 115 or 118 that is provided at a radial position within the range of approximately 23-24 mm from the center for a teaching operation for determining an optimal pulse condition, and an information recording area 113, 116 or 119 that is provided at a radial position within the range of approximately 24-58 mm from the center for recording user data.

The recording layers 13 and 15 have a multilayered thin film structure, like the recording layer 3 shown in Fig. 2, and the transmittance thereof decreases when information is recorded. The recording layer 17 has a multilayered thin film structure, like the recording layer 5 shown in Fig. 2.

In the lead-in area 117, there are recorded: a correction coefficient $\alpha 1$ that indicates the decrease of the transmittance of the recording layer 15 when information is recorded on the recording layer 15; a correction coefficient $\alpha 2$ that indicates the decrease of the transmittance of the recording layer 13 when information is recorded on the recording layer 13; and a correction coefficient $\alpha 3$ that indicates the sum of decreases of the transmittances of the recording layers 13 and 15 when information is recorded on both the recording layers 13 and 15. For example, the correction coefficient $\alpha 1$ is given by the following equation.

$$\alpha 1 = T11/T12$$

Here, T11 represents a transmittance of the recording layer 15 before recording information, and T12 is a transmittance of the recording layer 15 after recording information, for example.

The correction coefficients $\alpha 1$ and $\alpha 2$ are recorded together with recording layer specifying information indicating the recording layers 15 and 13, respectively. The correction coefficient α3 is recorded together with recording layer specifying information indicating both the recording layers 13 and 15.

When user data is recorded on the recording medium 11, completed recording layer information that indicates a number of recording layers on which information is already recorded, is recorded in a special location in the information recording area 119. For example, the completed recording layer information is three-bit information β. If only the recording layer 17 already has the recording of information completed, β is "100" in binary. If the recording layers 17 and 16 already have the recording of information completed, β is "110" in binary. If all the recording layers already have the recording of information completed, β is "111" in binary.

When information is recorded again on the recording medium 11, the reference reflected light levels R11 and R21 are measured in the lead-in areas 114 and 117 by a recording and reproducing device when it is activated, and the correction coefficients α1, α2 and α3 and the completed recording layer information β are read.

In addition, similarly to the first embodiment, test recordings are performed while changing the pulse condition in the test recording areas 112, 115 and 118 on the recording layers 13, 15 and 17. Then, a teaching operation is performed for determining a temporary pulse condition from the measurement result of the quality of the reproduced signal thereof.

In addition, reflected light levels R12 and R22 of the test recording areas 115 and 118 are measured when performing the teaching operation.

When user data is recorded in the information recording area 113 on the recording layer 13, the temporary pulse condition that is determined in the test recording area 112 is used for the recording. Namely, the temporary pulse condition becomes the final pulse condition.

When user data is recorded in the information recording area 116 on the recording layer 15, the laser beam intensity of the temporary pulse condition determined in the test recording area 115 is corrected by the reference reflected light level R11 of the lead-in area 114, the reflected light level R12 of the test recording area 115 and the correction coefficient α2 if necessary, so as to make the final pulse condition for the recording.

More specifically, the laser beam level of the temporary pulse condition is corrected by the reflected light levels R11 and R12 of the lead-in area 114 and the test recording area 115, so as to determine an effective pulse condition that compensates for the influence of a transmittance variation due to the completed state of the test recording area 112. Furthermore, it is decided whether the recording layer 13 is already completed or not from the completed recording layer information. If the recording layer 13 is not completed yet, the effective pulse condition determined in the test recording area 115 is used for the recording. Namely, the effective pulse condition becomes the final pulse condition. On the other hand, if the recording layer 13 already has the recording completed, a laser beam intensity of the effective pulse condition is corrected by the correction coefficient α2 to make the final pulse condition for the recording.

Here, the effective pulse condition means an optimal pulse condition for the recording layer 15 when the recording layer 13 does not have recording completed. The reflected light level in the recording layer 15 is proportional to the square of the transmittance of the recording layer 13. In addition, the optimal laser beam intensity for the recording layer 15 is inversely proportional to the transmittance of the recording layer 13. Therefore, when the laser beam intensity of the temporary pulse condition determined in the test recording area 115 is represented by P10, the laser beam intensity of the effective pulse condition is given as below.

$$P10 \times (R12/R11)^{(1/2)}$$

In addition, the laser beam intensity of the final pulse condition when user data is recorded in the information recording area 116 is given as below.

$$P10 \times (R12/R11)^{(1/2)} \times \alpha2$$

When user data is recorded in the information recording area 119 on the recording layer 17, the laser beam intensity of the temporary pulse condition determined in the test recording area 118 is corrected by the reference reflected light level R21 of the lead-in area 117, the reflected light level R22 of the test recording area 118 and the correction coefficients α1-α3 if necessary, so as to make the final pulse condition for the recording.

More specifically, the laser beam level of the temporary pulse condition is corrected by the reflected light levels R21 and R22 of the lead-in area 117 and the test recording area 118 so as to obtain an effective pulse condition, by compensating for the influence of a transmittance variation due to the completed state of the test recording area 112. Furthermore, it is decided whether the recording layers 13 and 15 already have recording of information completed or not from the completed recording layer information.

If each of the recording layers 13 and 15 do not have recording completed yet, the effective pulse condition obtained in the test recording area 118 is used for recording. Namely, the effective pulse condition becomes the final pulse condition. Here, the effective pulse condition means an optimal pulse condition for the recording layer 17 when the recording layers 13 and 15 have not had recording completed. When the laser beam intensity of the temporary pulse condition determined in the test recording area 118 is P20, the laser beam intensity of the effective pulse condition is given

as below.

$$P20 \times (R22/R21)^{(1/2)}$$

In addition, if only the recording layer 13 already has recording completed, the laser beam intensity of the effective pulse condition is corrected by the correction coefficient $\alpha2$, and information is recorded with the final pulse condition of the laser beam intensity that is determined as below.

$$P20 \times (R22/R21)^{(1/2)} \times \alpha2$$

If only the recording layer 15 already has recording completed, the laser beam intensity of the temporary pulse condition is corrected by the correction coefficient $\alpha1$, and information is recorded with the final pulse condition of the laser beam intensity that is determined as below.

$$P20 \times (R22/R21)^{(1/2)} \times \alpha1$$

Both the recording layers 13 and 15 already have recording completed, the laser beam intensity of the temporary pulse condition is corrected by the correction coefficient $\alpha3$, and information is recorded with the final pulse condition that is determined as below.

$$P20 \times (R22/R21)^{(1/2)} \times \alpha3$$

(Effects)

As described above, the laser beam intensity of the pulse condition (temporary pulse condition) obtained by the teaching operation in the test recording area 115 on the recording layer 15 is corrected by the reference reflected light level R11 in the lead-in area 114 and the reflected light level R12 in the test recording area 115, so that a constant pulse condition (effective pulse condition) can be obtained without being affected by the transmittance difference between the recorded state and the non-recorded state in the test recording area 112.

In addition, the laser beam intensity of the pulse condition (temporary pulse condition) obtained by the teaching operation in the test recording area 118 on the recording layer 17 is corrected by the reference reflected light level R21 in the lead-in area 117 and the reflected light level R22 in the test recording area 118, so that a constant pulse condition (effective pulse condition) can be obtained without being affected by the transmittance difference between the recorded state and the non-recorded state in the test recording areas 112 and 115.

Furthermore, when user data is recorded in the information recording area on the recording layers 15 and 17, a correction coefficient corresponding to the completed recording layer information is selected from a group of the correction coefficients $\alpha1$, $\alpha2$ and $\alpha3$. Thus, a decrease of the recording sensitivity of the recording layers 15 and 17 due to the recording of information on the recording layers 13 and 15 can be compensated for by using the correction coefficient, so that user data can be recorded.

As described above, even if the laser beam transmittance of the recording layer varies due to the recorded or unrecorded state of information on the recording layer, a correct pulse condition can be determined regardless of the recording state of information on each recording layer by the teaching operation, and user data can be recorded correctly.

(Variation)

Note that the reference reflected light levels of the recording layers 15 and 17 can be measured also in a reflectance reference area that is provided separately from the lead-in area. In this situation, the lead-in area may be provided only to one of the recording layers. In addition, information in the lead-in area may be recorded by embossed pits.

Furthermore, it is obvious that the same effect can be obtained if the number of recording layers is two or four or more though it is three in this embodiment.

In addition, when the reflected light level in the test recording area is measured in an area where a signal is recorded, it is preferable to measure the reflected light level of a part in which the signal quality satisfies a predetermined decision criterion, i.e., a part in which information is recorded by an appropriate pulse condition.

Furthermore, in the teaching operation, the optimal pulse condition may be obtained by performing test recordings while changing recording and reproducing conditions and by comparing measurement results of the quality of reproduced signals with each other, or the temporary pulse condition may be determined by a simpler method. One of the simpler methods is, for example, a method in which measurement result of quality of the reproduced signal is compared with a predetermined condition at any time, and when the measurement result satisfies the predetermined condition, the pulse condition at that time is regarded as the temporary pulse condition. In this situation, it is preferable to measure the quality of the reproduced signal by measuring the jitter value (the variation of the position of the reproduced signal with respect to a clock to be a reference), the error rate of data, the amplitude of the reproduced signal or the degree of modulation of the reproduced signal.

(Third Embodiment)

(Structure)

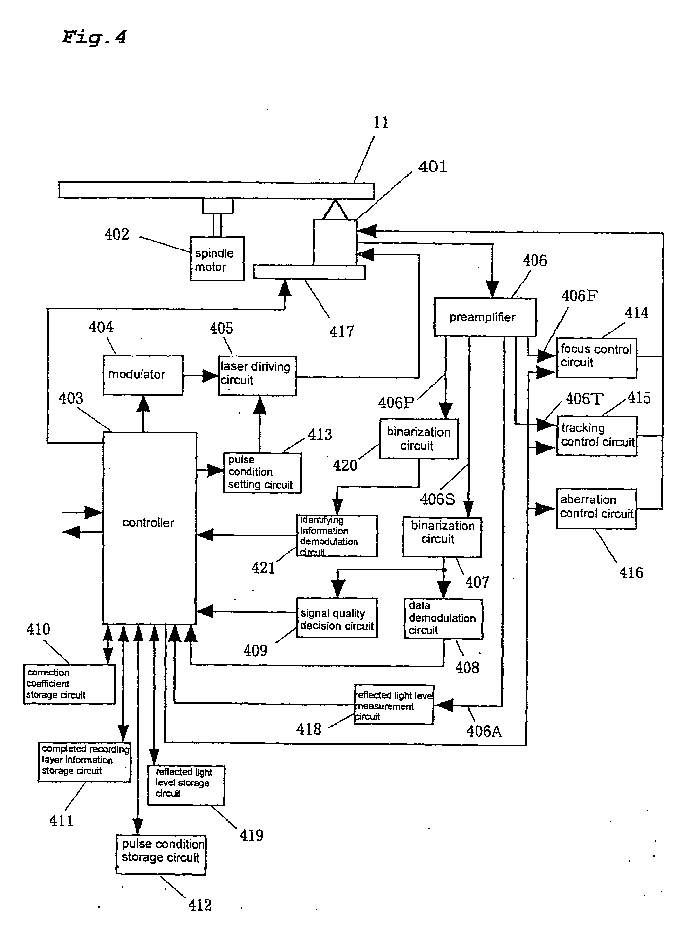

Fig. 4 is a block diagram showing a structure of an embodiment of the recording and reproducing device according to the present invention, and indicates a state equipped with the optical information recording medium 11 that has a plurality of recording layers as shown in Fig. 3.

The recording and reproducing device shown in Fig. 4 includes: a spindle motor 402 to which a recording medium is attached for rotation; a controller 403; a modulator 404 for converting data to be recorded into a recording signal; a laser driving circuit 405 for driving a semiconductor laser in accordance with a recording signal, an optical head 401 having the semiconductor laser for condensing a laser beam onto a medium so as to record information and to obtain a reproduced signal from a reflected light; a preamplifier 406 for amplifying the reproduced signal so as to generate a reflected light level signal 406A; information reproduced signals 406S and 406P; a focus error signal 406F and a tracking error signal 406T; a reflected light level measurement circuit 418 for measuring a reflected light level of the reflected light level signal 406A; a reflected light level storage circuit 419 for storing the measured reflected light level; a binarization circuit 420 for converting the information reproduced signal 406P into a binary signal; an identifying information demodulation circuit 421 for demodulating the binary signal into identifying information; a binarization circuit 407 for converting the information reproduced signal 406S into a binary signal; a data demodulation circuit 408 for demodulating the binary signal into data; a signal quality decision circuit 409 for deciding the quality of a reproduced signal of a recording signal that is a test-recorded signal of specific data in the test recording area of the recording medium 11; a pulse condition storage circuit 412 for storing an optimal record condition that is obtained by the teaching operation, a correction coefficient storage circuit 410 for storing a correction coefficient that indicates a transmittance difference of the recording layer depending on the recording state that is read out of the recording medium 11; a completed recording layer information storage circuit 411 for storing completed recording layer information that is read out of the recording medium 11; a pulse condition setting circuit 413 for controlling a laser pulse in accordance with the recording condition, the completed recording layer information and the correction coefficient; a focus control circuit 414 for controlling the optical head 401 in accordance with the focus error signal 406F so that the laser beam is focused on a target recording layer of the recording medium 11; a tracking control circuit 415 for controlling the optical head 401 in accordance with the tracking error signal 406T so that the laser beam traces a track on the recording medium 11 appropriately; an aberration control circuit 416 for controlling the optical head 401 so that spherical aberration of the laser beam becomes minimum on the recording layer on which information is recorded or reproduced; and a moving portion 417 for moving the optical head 401 in the radial direction of the recording medium 11.

Here, the focus error signal 406F is generated by a general method that is called an astigmatism method, or the like. The tracking error signal 406T is generated by a general method that is called a push-pull method, or the like.

Note that the signal is recorded by changing the phase of a phase change layer (not shown) of the recording layers 13, 15 or 17 of the recording medium 11 partially from a crystalline state to an amorphous state so as to form a mark. In addition, the recording layers 13, 15 and 17 have characteristics in which the reflected light level is high for the crystalline state of the phase change layer and is low for the amorphous state of the phase change layer.

In the structure described above, the signal quality decision circuit 409 and the controller 403 constitute a test recording unit for performing test recordings in a test recording layer that is at least one of the plurality of recording layers, so as to determine the temporary pulse condition including intensity of the laser beam. In particular, the signal quality decision circuit 409 constitutes a signal quality evaluation unit for evaluating quality of the reproduced signal, and the controller 403 constitutes a temporary pulse condition setting unit. In addition, the reflected light level measurement circuit 418 constitutes a reflected light level measurement unit for measuring a reflected light level of the laser beam from the recording layer. In addition, the controller 403 constitutes a final pulse condition determination unit for determining the final pulse condition. The data demodulation circuit 408 constitutes a correction coefficient obtaining unit for obtaining a correction coefficient, a completed recording layer obtaining unit for obtaining completed recording layer information, and a transmittance change information obtaining unit for obtaining transmittance change information that indicates whether the laser beam transmittance decreases or increases.

(Recording and Reproducing Method)

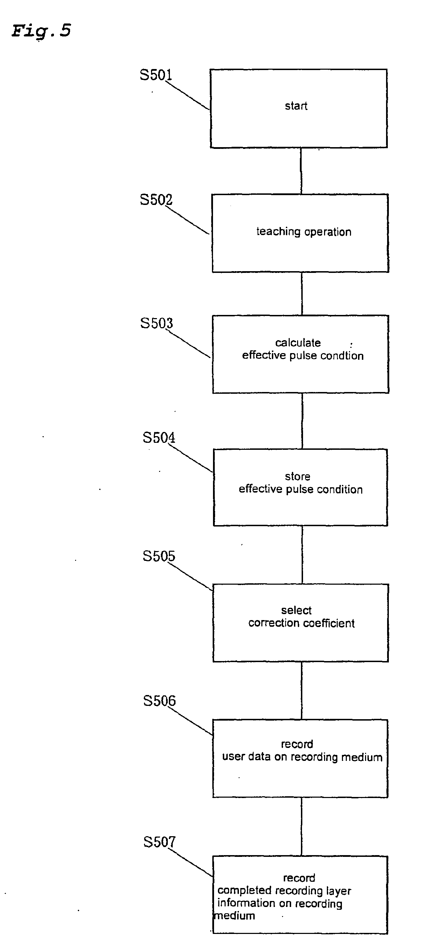

Fig. 5 is a flowchart showing a recording and reproducing method that utilizes the recording and reproducing device shown in Fig. 4, which will be described with reference to Fig. 3.

(1) First, the controller 403 activates the recording and reproducing device in step S501. More specifically, the recording medium 11 that is attached to the spindle motor 402 is rotated, and then the optical head 401 irradiates a laser beam for reproducing information onto the recording medium 11. Also, the focus control circuit 414 and the tracking control circuit 415 are driven so that the laser beam is focused on the recording layer 17, the lead-in area 117 is accessed, and the laser beam is made to track an information track. Thus, the identifying information, the completed recording layer information, the correction coefficient of the recording medium 11 and other information are read from the lead-in area 117. Furthermore, the reference reflected light level R21 of the lead-in area 117 is measured.

Here, the reading of the identifying information and other information is performed by binarizing the information reproduced signal 406P that the optical head 401 obtained from the reflected light from the recording medium 11 by the binarization circuit 420, demodulating the binarized signal by the identifying information demodulation circuit 421, and sending it into the controller 403. The measurement of the reference reflected light level is performed by measuring the intensity of the reflected light level signal 406A by the reflected light level measurement circuit 418 and sending it into the controller 403.

In addition, the reference reflected light level R11 in the lead-in area 114 on the recording layer 15 is measured in the same manner as the reference reflected light level R21.

The controller 403 stores the completed recording layer information, the correction coefficient and the reference reflected light level in the completed recording layer information storage circuit 411, the correction coefficient storage circuit 410 and the reflected light level storage circuit 419, respectively.
(2) In the next step S502, the teaching operation is performed for determining the temporary pulse condition. The teaching operation is performed in accordance with the following procedure.

First, the controller 403 moves the optical head 401 to access the test recording area 118 on the recording layer 17. The controller 403 sets the pulse condition setting circuit 413 to a predetermined special condition or a condition designated by the identifying information.

Next, specific data delivered from the controller 403 for the teaching operation (data for the test recording) are converted into a laser drive signal by the modulator 404. The laser driving circuit 405 drives the semiconductor laser that is provided to the optical head 401 in accordance with the laser drive signal. The optical head 401 makes the semiconductor laser emit light, which is condensed on the recording medium 11 for recording a test signal in the test recording area 118.

The test-recorded data is reproduced by the preamplifier 406 and the binarization circuit 407. Furthermore, signal quality decision circuit 409 measures the jitter value of the reproduced signal (the variation quantity of the reproduced signal position with respect to the clock to be a reference) and compares it with a predetermined decision criterion for deciding the signal quality.

When the jitter value satisfies the decision criterion, a teaching result is sent to the controller 403, and the teaching operation finishes.

If the jitter value does not satisfy the decision criterion, the controller 403 changes the pulse condition of the pulse condition setting circuit 413 sequentially so as to decide the test recording of the specific data and the signal quality of the test-recorded data. This job is repeated until the jitter value satisfies the decision criterion so that the temporary pulse condition is obtained as the optimal recording condition in the test recording area 118.

In addition, the reflected light level measurement circuit 418 measures the reflected light level R22 in the test recording area 118, and the measurement result is stored in the reflected light level storage circuit 419. Fig. 9 shows a waveform of a reflected light level signal that is obtained in the test recording area. In an area where a signal is recorded, a signal is obtained that has the intensity of a low reflected light level RL in a recording mark portion and a high reflected light level RH in an intermark portion, substantially the same as in an uncompleted portion. The reflected light level R22 in the test recording area 118 is obtained by measuring the level RH in Fig. 9.

The same procedure is used for the recording layers 15 and 13 so as to determine the optimal recording condition and the reflected light level.
(3) Next in step S503, the laser beam intensity of the temporary pulse condition that is obtained by the teaching operation in step S502 is corrected by the reflected light levels in the lead-in area and the test recording area so that the effective pulse condition is determined. Here, the effective pulse condition means an optimal pulse condition in the test recording area on the recording layer that is closer to the laser beam incident side and in the uncompleted state.

For example, when determining the effective pulse condition of the recording layer 15, the reflected light level on the recording layer 15 is proportional to a square of transmittance of the recording layer 13. In addition, the optimal laser beam intensity on the recording layer 15 is inversely proportional to the transmittance of the recording layer 13. Therefore, when the laser beam intensity of the temporary pulse condition is represented by P10, the reference reflected light level is represented by R11, and the reflected light level in the test recording area 115 is represented by R12, the laser beam intensity in the effective pulse condition can be derived as below.

$$P10 \times (R12/R11)^{(1/2)}$$

(4) Next in step S504, the effective pulse condition obtained by the controller 403 in the S503 is stored in the pulse condition storage circuit 412.

(5) Next in step S505, the controller 403 selects a corresponding correction coefficient among the correction coefficients in accordance with the target recording layer information that specifies a recording layer on which user data is to be recorded and the completed recording layer information.

For example, when recording user data on the recording layer 17, it is decided whether the recording layers 13 and 15 already have the recording completed in accordance with the completed recording layer information for correction coefficient $\alpha 1$-$\alpha 3$ read out of the recording medium 11 in step S501. Here, the correction coefficient $\alpha 1$ represents a decrease of transmittance of the recording layer 15 when information is recorded on the recording layer 15. The correction coefficient $\alpha 2$ represents a decrease of transmittance of the recording layer 13 when information is recorded on the recording layer 13. The correction coefficient $\alpha 3$ represents a decrease of the sum of transmittance of the recording layers 13 and 15 when information is recorded on both the recording layers 13 and 15. If both the recording layers 13 and 15 do not have recording completed, the correction coefficient is not used. If only the recording layer 13 has recording completed, the correction coefficient $\alpha 2$ is selected. If only the recording layer 15 has recording completed, the correction coefficient $\alpha 1$ is selected. If both the recording layers 13 and 15 have recording completed, the correction coefficient $\alpha 3$ is selected.

(6) Next in step S506, the controller 403 derives the final pulse condition from the effective pulse condition and the correction coefficient, sets it in the pulse condition setting circuit 413 and records user data in the information recording area. Here, the final pulse condition includes the intensity, length and generation timing of the laser pulse, which are set corresponding to the length and the interval of the mark to be recorded. Note that a detailed explanation of the final pulse condition is omitted here because it is described in the embodiment described above.

(7) Furthermore in step S507, the controller 403 records the latest completed recording layer information in a specific area of the recording medium 11 or in the completed recording layer information storage circuit 411.

(Effects)

As described above, a decrease of recording sensitivity of the recording layers 15 and 17 due to the recording of user data on the recording layers 13 and 15 can be compensated for by using the correction coefficient, so that user data can be recorded correctly.

(Variations)

Note that it is possible that the completed recording layer information includes completed address information for specifying the position of a completed area where user data is recorded. In this case, it is possible to read the completed address information before new user data is recorded, so that the correction coefficient can be selected in accordance with the position of the selected completed area and the position where user data is to be recorded.

For example, it is supposed that when recording user data in the recording layer 17, it is decided from the completed address information included in the completed recording layer information read out in step S501, that all areas of the recording layer 15 already have recording completed and that the recording layer 13 has recording partially completed. In this case, if the position where information is to be recorded on the recording layer 17 corresponds to the position of the completed area on the recording layer 15 in step S505, the correction coefficient $\alpha 3$ is selected. If it corresponds to the position of the uncompleted area on the recording layer 15, the correction coefficient $\alpha 1$ is selected.

Thus, even if the recording layer at the front side has recording partially completed, a decrease of recording sensitivity due to the recording of user data on the front recording layer can be compensated for securely in accordance with a relationship between the position of the completed area and the position where information is to be recorded.

In addition, though test-recorded data is reproduced in the teaching operation, and the jitter value of the reproduced signal is measured so as to determine the pulse condition in this embodiment, it is possible to determine the pulse condition by measuring the error rate of the data or the amplitude or the degree of modulation of the reproduced signal. Note that when measuring the amplitude or the degree of modulation of the reproduced signal, it is preferable to use the information reproduced signal 406S that is not binarized.

In addition, the processes for the recording and reproducing method that are described with reference to Fig. 5 in this embodiment are not necessarily performed in the order described above, but can be performed in a manner where some processes are switched around.

For example, the measurement of the reference reflected light level in step S501 or the measurement of the reflected light level in step S502 can be performed in step S503 just before determining the effective pulse condition.

In addition, blocks and hardware of the block diagram shown in Fig. 4 can be typically realized as an LSI, that is an integrated circuit. Each of them can be structured discretely into a single chip, or some or all of them can be structured into a single chip.

For example, the controller shown in Fig. 4 can be structured into a single chip solely or together with other elements.

Instead of the LSI, it may be an IC, a system LSI, a super LSI, or an ultra LSI depending on the degree of integration.

In addition, the method of making the integrated circuit is not limited to the LSI, but it can be realized by a custom circuit or a general-purpose processor. It is possible to use a field programmable gate array (FPGA) that can be programmed after the LSI is manufactured or a reconfigurable processor in which connection or setting of circuit cells in the LSI can be reconfigured.

Furthermore, if a new technology of integrating circuits appears for replacing the LSI by development of the semiconductor technology or another derived type of technology, the technology can be used for integrating the functional blocks. It is also possible to utilize a biotechnology application .

(Fourth Embodiment)

(Structure and Operation)

A recording and reproducing method according to a fourth embodiment of the present invention will be described in the situation where it is applied to the optical information recording medium shown in Fig. 3.

When recording information on the recording medium 11 shown in Fig. 3, the recording and reproducing device first measures the reference reflected light levels R11 and R21 in the lead-in areas 114 and 117.

Next, the teaching operation is performed similarly to the second embodiment. Namely, the recording and reproducing device performs the test recordings while changing the pulse condition in the test recording areas 112, 115 and 118 on the recording layers 13, 15 and 17. Furthermore, the test-recorded signal is reproduced, the quality of the reproduced signal is measured, and a temporary pulse condition is determined from the measurement result. Furthermore, during the teaching operation, the reflected light levels R12 and R22 in the test recording areas 115 and 118 are measured.

When recording user data in the information recording area 113 on the recording layer 13, the temporary pulse condition obtained in the test recording area 112 is used for the recording.

When recording user data in the information recording area 116 on the recording layer 15, the laser beam intensity of the temporary pulse condition obtained in the test recording area 115 is corrected by the reflected light levels R11 and R12 of the lead-in area 114 and the test recording area 115 first, so as to obtain the effective pulse condition by compensating for the influence of the transmittance variation due to a completed state of the test recording area 112. Here, the effective pulse condition represents an optimal pulse condition of the recording layer 15 where the recording layer 13 is in the uncompleted state for recording, which is determined in the same manner as the second embodiment. Next, the reflected light level R13 in the information recording area 116 is measured, and the laser beam intensity of the effective pulse condition is corrected by the reflected light levels R11 and R13, so that the final pulse condition is determined by compensating for the influence of the transmittance variation due to the completed state of the information recording area 113. Thus, the user data is recorded with the final pulse condition.

Here, when the laser beam intensity of the effective pulse condition is denoted by P11, the laser beam intensity of the final pulse condition is determined as below.

$$P11 \times (R11/R13)^{(1/2)}$$

When recording user data in the information recording area 119 of the recording layer 17, the laser beam intensity of the temporary pulse condition that is determined in the test recording area 118 is corrected by the reflected light levels R21 and R22 of the lead-in area 117 and the test recording area 118 first so that the effective pulse condition is obtained in which the influence of the transmittance variation due to the completed state of the test recording area 112 is compensated for. Here, the effective pulse condition represents an optimal pulse condition of the recording layer 17 in the state where the recording layers 13 and 15 do not have recording completed, which is determined in the same manner as the second embodiment. Next, the reflected light level R23 in the information recording area 119 is measured, the laser beam intensity of the effective pulse condition is corrected by the reflected light levels R21 and R23 so that the final pulse condition is obtained by compensating for the influence of the transmittance variation due to the completed state of the information recording areas 113 and 115. Thus, user data is recorded with the final pulse condition.

Here, when the laser beam intensity of the effective pulse condition is denoted by P21, the laser beam intensity in the final pulse condition can be determined as below.

$$P21 \times (R21/R23)^{(1/2)}$$

Note that the reflected light levels in the test recording area and the information recording area are obtained by measuring the reflected light level RH at the intermark portion between the areas where a signal is recorded or in the uncompleted portion as described above with reference to Fig. 9.

(Effects)

As described above, a constant pulse condition (effective pulse condition) can be obtained without being affected by the influence of a transmittance difference between the recorded state and the non-recorded state in the test recording area 112, by correcting the laser beam intensity of the pulse condition (temporary pulse condition) obtained by the teaching operation in the test recording area 115 on the recording layer 15, by using the reference reflected light level R11 in the lead-in area 114 and the reflected light level R12 in the test recording area 115.

In addition, when recording user data in the information recording area 116, the laser beam intensity is corrected by the reflected light levels R11 and R13 in the lead-in area 114 and the information recording area 116, so that a decrease of the recording sensitivity of the recording layer 15 due to recording of information on the recording layer 13 is compensated for by using the correction coefficient. Thus, user data can be recorded correctly.

In addition, the laser beam intensity of the pulse condition (temporary pulse condition) that is obtained by the teaching operation in the test recording area 118 of the recording layer 17 is corrected by the reference reflected light level R21 in the lead-in area 117 and the reflected light level R22 in the test recording area 118, so that a constant pulse condition (effective pulse condition) can be obtained without being affected by the influence of the transmittance difference among the recorded state and the non-recorded state in the test recording areas 112 and 115.

In addition, when recording user data in the information recording area 119, the laser beam intensity is corrected by the reflected light levels R21 and R23 in the lead-in area 117 and the information recording area 119, so that a decrease of recording sensitivity of the recording layer 17 due to recording of information on the recording layers 13 and 15 can be compensated for by using the correction coefficient. Thus, user data can be recorded correctly.

(Variations)

Note that the measurement of the reference reflected light level on the recording layers 15 and 17 may be performed in a reflectance reference area that is provided separately from the lead-in area. In this case, the lead-in area may be provided to only one of the recording layers. In addition, the information of the lead-in area may be recorded as embossed pits.

Furthermore, though the number of recording layers in this embodiment is three, the same effect is obtained if it is two or four or more.

In addition, if the reflected light level of the test recording area is measured in an area where a signal is recorded, it is preferable to measure the reflected light level of a part where the signal quality satisfies a predetermined decision criterion, i.e., a part where the appropriate pulse condition is used for the recording.

In addition, the measurement of the reflected light level in the test recording area and the information recording area may be performed after erasing the recorded signal.

In addition, it is preferable to perform the measurement of the reflected light level in the information recording area during recording of user data at a predetermined time interval or a predetermined radial position pitch, or before recording user data at a predetermined radial position pitch.

(Fifth Embodiment)

(Structure and Operation)

A recording and reproducing method according to a fifth embodiment of the present invention will be described in the situation where it is applied to the optical information recording medium shown in Figs. 1 and 2.

In the lead-in area 104 shown in Fig. 1, a maximum value of the laser beam intensity when recording information on the recording layer 3 by recording information is recorded in advance. The maximum value of the laser beam intensity is selected so that the transmittance change quantity of the recording layer 3 due to recording of information becomes lower than the certain value.

When using the recording medium 1, a recording and reproducing device is activated and reads the maximum value of the laser beam intensity stored in the lead-in area 104. Next, it performs test recordings while changing the pulse condition including the intensity, the length and the generation timing of the laser pulse in the test recording area 105 of the recording layer 5. Then, it performs the teaching operation for determining the optimal pulse condition from a measurement result of the quality of the reproduced signal. In addition, the teaching operation is performed in the test recording area 102 of the recording layer 3 within the range that does not exceed the maximum value of the laser beam intensity.

When recording user data in the information recording area 103 on the recording layer 3 and in the information recording area 106 on the recording layer 5, the pulse condition determined in the test recording area 102 and the pulse condition determined in the'test recording area 105 are respectively used for the recording.

(Effect)

The transmittance of the recording layer 3 changes in proportion with the ratio of the area of crystalline portions to the area of amorphous portions of the phase change layer 202 shown in Fig. 2. Namely, the larger the recording mark becomes, the larger the transmittance difference between the non-recorded state and the recorded state.

Therefore, the change of the transmittance due to an excessively large recording mark can be suppressed by setting the laser beam intensity for recording to a value below a predetermined value, so that the influence upon recording and reproduction on the recording layer 5 can be reduced.

For example, suppose that the transmittance of the recording layer 3 is 50% when the entire area of the phase change layer 202 is in the crystalline state, and that the transmittance of the recording layer 3 is 40% when the entire area of the phase change layer 202 is in the amorphous state. Supposing that the width of the recording mark is substantially the same as the width between marks in the radial direction and also that an area of the portion in the amorphous state is approximately one fourth of the entire area when recording information by the mark length recording method under the appropriate pulse condition, then the transmittance of the recording layer 3 becomes that shown below.

$$40\% \times 1/4 + 50\% \times 3/4 = 47.5\%$$

Namely, when information is recorded with the appropriate pulse condition, a decrease of the transmittance of the recording layer 3 is as below.

$$50\% - 47.5\% = 2.5\%$$

In contrast, when information is recorded with the laser beam intensity that is 1.6 times the appropriate pulse condition, the area of the portion in the amorphous state will be 1.6 times the area of when information is recorded with the appropriate pulse condition. Then, it becomes approximately 1.6/4 of the entire area. Therefore, the transmittance of the recording layer 3 in this case becomes that shown below.

$$40\% \times 1.6/4 + 50\% \times 2.4/4 = 46\%$$

Namely, when information is recorded with the appropriate pulse condition, a decrease of the transmittance of the recording layer 3 is that shown below.

$$50\% - 46\% = 4\%$$

Therefore, if a permissible decrease of the transmittance of the recording layer 3 is 4% for appropriate recording and reproduction of information on the recording layer 5, the maximum value of the laser beam intensity for recording is set to a value of 1.6 times the appropriate laser beam intensity.

(Variations)

Note that though the test recording area is arranged on the recording layer 5 at the radial position of the test recording area 102 in this embodiment, the same effect can be obtained by arranging a reproduction-only area or an information recording area. In addition, the number of the recording layers can be three or more.

In addition, instead of the maximum value of the laser beam intensity for recording information, information for calculating the maximum value may be stored in a specific area of the recording medium in advance, so that the maximum value can be derived from this information and a result of the test recording. The method for determining the maximum value is not limited. For example, there are some methods including a method in which the maximum value is calculated by multiplying a predetermined coefficient to the laser beam intensity such that the intensity of the reproduced signal becomes a predetermined value in the test recording. In another method, the maximum value is calculated by multiplying a predetermined coefficient to the laser beam intensity such that the variation ratio of the intensity of the reproduced signal to the laser beam intensity becomes a predetermined value.

Furthermore, in each of the first through fifth embodiments, the recording mark may be formed by making the recording layer in the crystalline state become partially amorphous or by making the recording layer in the amorphous state become partially crystalline. Furthermore, the recording medium is not limited to an erasable type on which information can be rewritten, but it may be a recording medium of write-once-read-many type.

(Additions)

(Addition 1) A recording and reproducing method of an optical information recording medium having a plurality of recording layers for recording, reproducing or erasing information by irradiating a laser beam from one side, the method comprising the steps of:

for at least one recording layer:
recording a correction coefficient, that indicates a difference of a laser beam transmittance between a recorded state and a non-recorded state of the recording layer that is closer to a laser beam incident side than the recording layer, in a specific place of the optical information recording medium in advance; and
on the at least one recording layer,
determining a temporary pulse condition including an intensity of the laser pulse by a test recording, measuring a reflected light level of one of an uncompleted portion, an intermark portion and an information erased portion in a test-recorded area,

measuring a reference reflected light level on a recording layer that is closer to the laser beam incident side than the recording layer at a radial position different from an area where a test recording or an information recording is performed,

calculating an effective pulse condition from the reflected light levels of the temporary pulse condition in the test-recording area and the reference reflected light level,

determining a final pulse condition by using the effective pulse condition and the correction coefficient, and

recording user data by the final pulse condition.

(Addition 2) The recording and reproducing method according to Addition 1, wherein if an uncompleted area does not remain in any recording layer for recording user data, another recording layer is completed successively for the recording, the method further comprising the steps of:

recording target recording layer information for specifying a recording layer on which the recording of the user data is performed, by using the correction coefficient and recording layer specifying information for specifying one of the recording layers that are closer to the laser beam incident side than the recording layer indicated by the target recording layer information, together with the correction coefficient in a specific place of the optical information recording medium in advance;

recording completed recording layer information for specifying a recording layer on which user data is already recorded in a specific place of the optical information recording medium;

reading the completed recording layer information before recording new user data;

selecting the correction coefficient that is recorded together with the target recording layer information identical to the recording layer on which information is to be recorded and the recording layer specifying information identical to the completed recording layer information; and

determining a final pulse condition by using the effective pulse condition and the selected correction coefficient.

(Addition 3) The recording and reproducing method according to Addition 2, wherein it is decided whether each of the recording layers that are closer to the laser beam incident side than the recording layer on which the user data is to be recorded, already has the recording completed or not in accordance with the completed recording layer information that is read out of the optical information recording medium, and a correction coefficient is selected corresponding to the layer that already has the recording completed.

(Addition 4) The recording and reproducing method according to Addition 1, further comprising the steps of:

recording target recording layer information for specifying a recording layer on which the recording of the user data is performed by using the correction coefficient and recording layer specifying information for specifying one of recording layers that are closer to the laser beam incident side than the recording layer indicated by the target recording layer information, together with the correction coefficient, in a specific place of the optical information recording medium in advance;

recording completed recording layer information that specifies the recording layer where user data is already recorded and includes completed address information for indicating a completed area in the recording layer in a specific place of the optical information recording medium;

reading the completed recording layer information before recording new user data;

selecting the correction coefficient that is recorded together with the target recording layer information identical to the recording layer on which information is to be recorded and the recording layer specifying information identical to the completed recording layer information; and

determining a final pulse condition by using the effective pulse condition and the selected correction coefficient.

(Addition 5) The recording and reproducing method according to Addition 4, further comprising the steps of deciding the position of the completed area on the completed recording layer from the completed address information that is read out of the recording medium, and selecting a correction coefficient in accordance with a position of the completed area and a position where new user data is to be recorded.

(Addition 6) A recording and reproducing method of an optical information recording medium having a plurality of recording layers for recording, reproducing or erasing information by irradiating a laser beam from one side, the method comprising the steps of:

on at least one recording layer,

determining a temporary pulse condition including an intensity of the laser pulse by a test recording,

measuring a reflected light level of one of an uncompleted portion, an intermark portion and an information erased portion in a test-recorded area,

measuring a reference reflected light level on a recording layer that is closer to the laser beam incident side than the recording layer at a radial position different from an area where a test recording or an information recording is performed,

calculating an effective pulse condition from the reflected light levels of the temporary pulse condition in the test-recording area and the reference reflected light level,

measuring a reflected light level of an information recording area for recording user data,

determining a final pulse condition in accordance with the effective pulse condition, a reflected light level in the information recording area and the reference reflected light level, and

recording user data by the final pulse condition.

(Addition 7) The recording and reproducing method according to Addition 6, wherein the reflected light level in the information recording area is measured during recording user data at a predetermined time interval or a predetermined radial position pitch.

(Addition 8) A recording and reproducing method of an optical information recording medium that has a plurality of recording layers for recording, reproducing or erasing information by irradiating a laser beam from one side and a decreasing or increasing laser beam transmittance due to recording of information on at least one of the recording layers, the method comprising the steps of:

performing test recordings while changing an intensity of the laser beam at least on a recording layer that is farther from the laser beam incident side than the recording layer;

reproducing the test-recorded signal;

evaluating quality of the reproduced signal by measuring one of an amplitude, a degree of modulation, a jitter value and an error rate of the reproduced signal;

setting intensity of the laser beam of the temporary pulse condition to a value close to the maximum value such that the signal quality satisfies a predetermined criterion for a medium with a recording layer at the laser beam incident side in which laser beam transmittance is decreased when data is recorded on a recording layer closer to the laser beam incident side than the test recording layer;

setting intensity of the laser beam of the temporary pulse condition to a value close to the minimum value such that the signal quality satisfies a predetermined criterion for a medium with a recording layer at the laser beam incident side in which laser beam transmittance is increased when data is recorded on a recording layer closer to the laser beam incident side than the test recording layer;

measuring a reflected light level of one of an uncompleted portion, an intermark portion and an information erased portion in a test-recorded area;

measuring a reference reflected light level on a recording layer that is closer to the laser beam incident side than the recording layer at a radial position different from an area where a test recording or an information recording is performed,

determining a final pulse condition from the reflected light levels of the temporary pulse condition in the test-recording area and the reference reflected light level; and

recording user data by the final pulse condition.

(Addition 9) The recording and reproducing method according to Addition 8, further comprising the steps of;

recording transmittance change information that indicates whether transmittance of a recording layer decreases or increases when information is recorded on the recording layer on the recording medium in advance; and

reading the transmittance change information so as to decide which direction the transmittance changes when information is recorded on the recording layer.

(Addition 10) A recording and reproducing method of an optical information recording medium that has a plurality of recording layers for recording, reproducing or erasing information by irradiating a laser beam from one side and a decreasing or increasing laser beam transmittance due to recording of information on at least one of the recording layers, the method comprising the steps of:

recording information that indicates a maximum value of a laser beam intensity for recording information on at least one recording layer or information for calculating the maximum value in a specific place of the optical information recording medium in advance; and

performing test recordings within the range of the laser beam intensity less'than the maximum value so as to determine a pulse condition; and

recording user data by the pulse condition determined by the test recordings.

(Addition 11) A recording and reproducing device of an optical information recording medium having a plurality of recording layers for recording, reproducing or erasing information by irradiating a laser beam from one side, the device comprising:

a reflected light level measurement unit for measuring a reflected light level from a recording layer;

a reflected light level storage unit for storing the measured reflected light level;

a correction coefficient storage unit for storing a correction coefficient that indicates a difference of laser beam transmittance between a recorded state and a non-recorded state of the recording layer;

a completed recording layer information storage unit for storing completed recording layer information that specifies a recording layer on which user data is already recorded;

a pulse condition setting unit for controlling a pulse condition including a laser beam intensity for recording information;

a signal quality decision unit for deciding quality of a reproduced signal; and

a controller for controlling the entire device, wherein the controller decides a pulse condition for recording user data by using a result of the test recording, the reflected light level of the test-recording area, the reflected light level to be a reference, the completed recording layer information and the correction coefficient.

(Addition 12) The recording and reproducing device according to Addition 11, wherein the controller selects a correction coefficient that is recorded together with the target recording layer information identical to the recording layer on which information is to be recorded and recording layer specifying information identical to completed recording layer information among coefficients, and decides the pulse condition for recording the user data by using the selected correction coefficient.

(Addition 13) The recording and reproducing device according to Addition 11, wherein the controller decides whether each of the recording layers closer to the laser beam incident side than the recording layer on which user data is to be recorded already has recording completed or not in accordance with the completed recording layer information that is read out of the optical information recording medium, and selects the correction coefficient corresponding to a recording layer that already has recording completed.

(Addition 14) The recording and reproducing device according to Addition 11, wherein the completed recording layer information includes completed address information that indicates a position of a completed area on the recording layer.

(Addition 15) The recording and reproducing device according to Addition 14, wherein the controller decides the position of the completed area on the recording layer in accordance with the completed address information that is read out of the recording medium, and selects the correction coefficient in accordance with the position of the completed area and a position where new user data is to be recorded.

(Addition 16) The recording and reproducing device according to Addition 11, wherein the signal quality decision unit measures one of an amplitude, a degree of modulation, a jitter value and an error rate of the reproduced signal so as to evaluate the quality of the signal.

(Addition 17) The recording and reproducing device according to Addition 11, wherein the pulse condition includes an intensity, a length and a generation timing of the laser pulse, which are set corresponding to a length and/or an interval of marks to be recorded.

(Addition 18) A recording and reproducing device of an optical information recording medium having a plurality of recording layers for recording, reproducing or erasing information by irradiating a laser beam from one side, the device comprising:

a reflected light level measurement unit for measuring a reflected light level from a recording layer;

a reflected light level storage unit for storing the measured reflected light level;

a pulse condition setting unit for controlling a pulse condition including an intensity of the laser beam for recording information;

a signal quality decision unit for deciding quality of the reproduced signal; and

a controller for controlling the entire device, wherein the controller performs test recordings while changing the intensity of the laser beam, reproduces the test-recorded signal, evaluates quality of the reproduced signal, sets the intensity of the laser beam of the temporary pulse condition to a value close to a maximum value such that the signal quality satisfies a predetermined criterion for a medium in which transmittance of the recording layer that is closer to the laser beam incident side than the recording layer decreases when information is recorded, sets the intensity of the laser beam of the temporary pulse condition to a value close to a minimum value such that the signal quality satisfies a predetermined criterion for a medium in which transmittance of the recording layer that is closer to the laser beam incident side increases when information is recorded, measures the reflected light level in the test-recording area, measures the reference reflected light level in a radial position different from an area where the test recording or information recording is performed on the recording layer closer to the laser beam incident side than the recording layer, decides a final pulse condition from the temporary pulse condition, the reflected light level in the test-recording area and the reference reflected light level, and records user data with the final pulse condition.

(Addition 19) The recording and reproducing device according to Addition 18, wherein the signal quality decision unit measures one of an amplitude, a degree of modulation, a jitter value and an error rate of the reproduced signal so as to evaluate quality of the signal.

(Addition 20) The recording and reproducing device according to Addition 18, wherein the pulse condition includes an intensity, a length and a generation timing of the laser pulse that are set corresponding to a length and/or interval of marks to be recorded.

(Addition 21) The recording and reproducing device according to Addition 18, wherein the controller reads transmittance change information that indicates whether transmittance of the recording layer decreases or increases when information is recorded on the recording layer from the recording medium, and decides which direction the transmittance changes when information is recorded on the recording layer.

(Description regarding Additions)

In order to achieve the above-mentioned object, a first method for recording and reproducing information according to the present invention is a recording and reproducing method of an optical information recording medium having a plurality of recording layers for recording, reproducing or erasing information by irradiating a laser beam from one side. The method includes, for at least one recording layer, recording a correction coefficient that indicates a difference of a laser beam transmittance between a recorded state and a non-recorded state of the recording layer that is closer to a laser beam incident side than the recording layer in a specific place of the optical information recording medium in advance, and on the at least one recording layer, determining a temporary pulse condition including an intensity of the laser pulse by a test recording, measuring a reflected light level in the test-recording area, measuring a reference reflected light level on a recording layer that is closer to the laser beam incident side than the recording layer at a radial position different from an area where a test recording or an information record is performed, calculating an effective pulse condition from the reflected light levels of the temporary pulse condition in the test-recording area and the reference reflected light level, determining a final pulse condition by using the effective pulse condition and the correction coefficient, and recording user data by the final pulse condition.

Thus, regardless of a recording state of information in each of the recording layers, a pulse condition can be determined correctly by the teaching operation so that user data can be recorded correctly.

Note that it is possible to set the intensity of the laser beam to a value within a range that does not exceed the maximum value such that the quality of the test-recorded signal satisfies a predetermined criterion and larger than a value such that the signal quality becomes the best for recording user data for a medium in which transmittance of a recording layer that is closer to the laser beam incident side decreases when information is recorded.

In addition, it is possible to set the intensity of the laser beam to a value within a range that does not drop below the minimum value such that the quality of the test-recorded signal satisfies a predetermined criterion and smaller than a value such that the signal quality becomes the best for recording user data for a medium in which transmittance of a recording layer that is closer to the laser beam incident side increases when information is recorded.

A second method for recording and reproducing information according to the present invention includes recording target recording layer information for specifying a recording layer on which the recording of the user data is performed by using the correction coefficient and recording layer specifying information for specifying one of recording layers that are closer to the laser beam incident side than the recording layer indicated by the target recording layer information together with the correction coefficient in a specific place of the optical information recording medium in advance, recording completed recording layer information for specifying a recording layer on which user data is already recorded in a specific place of the optical information recording medium, reading the completed recording layer information before recording new user data, selecting the correction coefficient that is recorded together with the target recording layer information identical to the recording layer on which information is to be recorded and the recording layer specifying information identical to the completed recording layer information, and determining a final pulse condition by using the effective pulse condition and the selected correction coefficient.

Thus, it is decided which recording layers among the recording layers that are closer to the laser beam incident side than the recording layer on which user data is to be recorded already has the recording completed, and the correction coefficient that is suitable for the recording state can be selected so that more appropriate pulse condition can be determined. Therefore, user data can be recorded more securely.

In addition, it is possible to use completed address information for specifying an end position where user data is already recorded instead of the completed recording layer information.

A third method for recording and reproducing information according to the present invention includes, on at least one recording layer, determining a temporary pulse condition including an intensity of the laser pulse by a test recording, measuring a reflected light level in the test-recording area, measuring a reference reflected light level on a recording layer that is closer to the laser beam incident side than the recording layer at a radial position different from an area where a test recording or an information recording is performed, calculating an effective pulse condition from the reflected light levels of the temporary pulse condition in the test-recording area and the reference reflected light level, measuring a reflected light level of an information recording area for recording user data, determining a final pulse condition in accordance with the effective pulse condition, a reflected light level in the information recording area and the reference reflected light level, and recording user data by the final pulse condition.

Thus, regardless of a recording state of information in each of the recording layers, a pulse condition can be determined correctly by the teaching operation so that user data can be recorded correctly.

In addition, a variation of transmittance in the test recording area on the recording layer can be suppressed so as to decrease the influence to recording and reproduction on a recording layer disposed at a rear side by recording a maximum value of the laser beam intensity for recording information on the recording layer in a specific place of the optical information recording medium in advance, performing test recordings within a range of the laser beam intensity less than the maximum value, and recording user data by the pulse condition that is determined by the test recordings.

A method and device for recording and reproducing information according to the present invention have an effect that even if a laser beam transmittance of a recording layer varies depending on whether information is recorded or not on an optical information recording medium having a plurality of recording layers for recording, reproducing or erasing information by irradiating a laser beam from one side, a correct pulse condition can be obtained by a teaching operation, regardless of the recording state of information on each of the recording layers, and that user data can be recorded correctly. Therefore, they are useful for an information recording device or the like that is required to have a large capacity for recording.

**Claims**

1. A method for recording information on an optical information recording medium having a plurality of recording layers for recording, reproducing or erasing data by irradiating a laser beam from one side, comprising the steps of:

   (a) determining a temporary pulse condition including intensity of the laser beam by performing a test recording on a test recording layer that is at least one recording layer of the plurality of recording layers;
   (b) measuring a test area reflected light level that is a reflected light level of the laser beam in an area in which the test recording is performed;
   (c) determining a final pulse condition by correcting the temporary pulse condition in accordance with the measured test area reflected light level; and
   (d) recording data with the final pulse condition.

2. The method according to claim 1, wherein step (b) includes measuring the reflected light level at one of an unused portion, an intermark portion and an information erased portion in the area in which the test recording is performed.

3. The method according to claim 1 or 2, further comprising a step of:

   (e) measuring a reflected light level of the laser beam in the test recording layer, by measuring a reference reflected light level that is a reflected light level in a radial position where data is not recorded on a recording layer which is closer to a laser beam incident side than the test recording layer, wherein

   step (c) includes determining the final pulse condition by correcting the temporary pulse condition in accordance with the reference reflected light level and the test area reflected light level.

4. The method according to claim 3, further comprising a step of:

   (f) obtaining a correction coefficient that indicates a difference of laser beam transmittance of the recording layer at the laser beam incident side between a recorded state and a non-recorded state, wherein
   step (c) includes determining the final pulse condition by correcting the temporary pulse condition in accordance with the correction coefficient, the reference reflected light level and the test area reflected light level.

5. The method according to claim 4, wherein step (f) includes obtaining the correction coefficient by reading the correction coefficient that is recorded at a specific position of the optical information recording medium in advance.

6. The method according to claim 4 or 5, wherein step (c) includes the steps of:

   (c1) determining an effective pulse condition including intensity of the laser beam that is appropriate when the recording layer at the laser beam incident side is in the non-recorded state by correcting the temporary pulse condition in accordance with the reference reflected light level and the test area reflected light level, and
   (c2) correcting the effective pulse condition in accordance with the correction coefficient so as to determine the final pulse condition.

7. The method according to any one of claims 4-6, further comprising a step of:

   (g) reading completed recording layer information from the optical information recording medium, the completed recording layer information specifying a completed recording layer on which data is already recorded, wherein
   step (f), which is a step for reading the correction coefficient from the optical information recording medium, the correction coefficient corresponding to
      target recording layer information that specifies one of the plurality of recording layers of the optical information recording medium, and
         recording layer specifying information that specifies one of the recording layers closer to the laser beam incident side than the recording layer indicated by the target recording layer information, obtains the correction coefficient corresponding to the target recording layer information that indicates the recording layer on which the data recording is performed, and the recording layer specifying information that coincides with the completed recording layer information.

8. The method according to claim 7, wherein the completed recording layer information further includes completed address information that indicates a position of a completed area in the completed recording layer.

9. The method according to claim 8, wherein step (f) includes deciding a position of the completed area on the completed recording layer in accordance with the completed address information that is read out from the optical information recording medium and selecting the correction coefficient in accordance with the position of the completed area and a position where data is recorded.

10. The method according to claim 3, further comprising a step of:

   (h) measuring a user area reflected light level that is a reflected light level of the laser beam in an information recording area in which data is recorded, wherein
      step (c) includes determining the final pulse condition by correcting the temporary pulse condition in accordance with the user area reflected light level, the reference reflected light level and the test area reflected light level.

11. The method according to claim 10, wherein step (c) includes the steps of:

   (c3) determining an effective pulse condition including intensity of the laser beam that is appropriate when the recording layer at the laser beam incident side is in the non-recorded state by correcting the temporary pulse condition in accordance with the reference reflected light level and the test area reflected light level, and
   (c4) correcting the effective pulse condition in accordance with the user area reflected light level and the reference reflected light level and determining the final pulse condition.

12. The method according to claim 10 or 11, wherein step (h) includes measuring the user area reflected light level at a predetermined time interval while data is recorded or at every predetermined radial position on the optical information recording medium.

13. The method according to claim 3, wherein step (a) includes steps of:

   (a1) performing test recordings while changing the intensity of the laser beam in the test recording layer, reproducing the test-recorded signal, measuring one of an amplitude, a degree of modulation, a jitter value and an error rate of the reproduced signal, and evaluating quality of the reproduced signal, and
   (a2) setting the intensity of the laser beam to a value close to the maximum value that satisfies a predetermined quality criterion of the reproduced signal for a medium with a recording layer at the laser beam incident side in which laser beam transmittance is decreased when data is recorded on a recording layer closer to the laser beam incident side than the test recording layer, and setting the intensity of the laser beam to a value close to the minimum value that satisfies a predetermined quality criterion for a medium with a recording layer at the laser beam incident side in which laser beam transmittance is increased when data is recorded on a recording layer closer to the laser beam incident side than the test recording layer.

14. The method according to claim 13, further comprising a step of:

   (i) reading transmittance change information from the optical information recording medium , the transmittance change information indicating whether the laser beam transmittance increases or decreases by recording data on the recording layer, wherein
      step (a2) includes obtaining the transmittance change information and deciding a trend of the transmittance change.

15. A method for recording information on an optical information recording medium having a plurality of recording layers for recording, reproducing or erasing data by irradiating a laser beam from one side, comprising the steps of:

   (j) reading laser beam intensity information from the optical information recording medium, the laser beam intensity information indicating a maximum value of laser beam intensity for recording data on at least one recording layer or being used for calculating the maximum value,
   (k) performing a test recording within a range of laser beam intensities less than the maximum value obtained from the laser beam intensity information, and

(I) recording data with a pulse condition determined on the basis of the test recording.

16. A device for recording information on an optical information recording medium having a plurality of recording layers for recording, reproducing or erasing data by irradiating a laser beam from one side, comprising:

a test recording unit operable to determine a temporary pulse condition including intensity of the laser beam by performing a test recording on a test recording layer that is at least one recording layer of the plurality of recording layers;

a reflected light level measurement unit operable to measure a reflected light level of the laser beam from the recording layer;

a final pulse condition determination unit operable to determine a final pulse condition that is used for recording data by correcting the temporary pulse condition in accordance with a test area reflected light level that is measured by the reflected light level measurement unit as a reflected light level of the laser beam in an area where the test recording is performed and a reference reflected light level that is measured by the reflected light level measurement unit as a reflected light level at a radial position where data is not recorded, on a recording layer closer to a laser beam incident side than the test recording layer.

17. The device according to claim 16, further comprising a correction coefficient obtaining unit operable to obtain a correction coefficient that indicates a difference of laser beam transmittance of the recording layer between a recorded state and a non-recorded state, wherein

the final pulse condition determination unit further uses the correction coefficient for correcting the temporary pulse condition and determines the final pulse condition.

18. The device according to claim 17, further comprising a completed recording layer obtaining unit operable to obtain completed recording layer information that specifies a completed recording layer on which data is already recorded, wherein

the final pulse condition determination unit further uses the completed recording layer information for correcting the temporary pulse condition and determines the final pulse condition.

19. The device according to claim 17 or 18, wherein the correction coefficient obtaining unit, which is an unit for reading the correction coefficient from the optical information recording medium, the correction coefficient corresponding to

target recording layer information for specifying one of the plurality of recording layers of the optical information recording medium, and

recording layer specifying information for specifying one of the recording layers closer to the laser beam incident side than the recording layer indicated by the target recording layer information, obtains the correction coefficient that corresponds to the target recording layer information that indicates the recording layer on which the data recording is performed and to the recording layer specifying information that coincides with the completed recording layer information.

20. The device according to claim 18, wherein the completed recording layer information further includes completed address information that indicates a position of a completed area in the completed recording layer.

21. The device according to claim 20, wherein the correction coefficient obtaining unit decides the position of the completed area on the completed recording layer from the completed address information that is read out of the optical information recording medium, and selects the correction coefficient in accordance with the position of the completed area and the position where data is recorded.

22. The device according to any one of claims 16-21, wherein the test recording unit includes a signal quality evaluation unit for measuring one of an amplitude, a degree of modulation, a jitter value and an error rate of a reproduced signal so as to evaluate quality of the signal.

23. The device according to any one of claims 16-22, wherein the final pulse condition includes an intensity, a pulse length and a generation timing of the laser beam that are set corresponding to a length and/or an interval of marks to be recorded.

24. The device according to claim 16, wherein the test record unit includes

a signal quality evaluation unit operable to perform test recordings while changing the intensity of the laser beam on the test recording layer, reproduce the test-recorded signal, and evaluate quality of the reproduced signal,

a temporary pulse condition setting unit operable to

set the intensity of the laser beam to a value close to the maximum value that satisfies a predetermined quality criterion of the reproduced signal for a medium with a recording layer at the laser beam incident side in which laser beam transmittance is decreased when data is recorded on a recording layer closer to the laser beam incident side than the test recording layer, and

set intensity of the laser beam to a value close to the minimum value that satisfies a predetermined quality criterion for a medium with a recording layer at the laser beam incident side in which laser beam transmittance is increased when data is recorded on a recording layer closer to the laser beam incident side than the test recording layer.

25. The device according to claim 24, wherein the signal quality evaluation unit measures one of an amplitude, a degree of modulation, a jitter value and an error rate of the reproduced signal so as to evaluate quality of the signal.

26. The device according to claim 24 or 25, wherein the final pulse condition includes intensity, pulse length and generation timing of the laser beam which are set corresponding to a length and/or an interval of marks to be recorded.

27. The device according to claim 24, further comprising a transmittance change information obtaining unit operable to read transmittance change information from the optical information recording medium, the transmittance change information indicating whether the laser beam transmittance increases or decreases by recording data on the recording layer, wherein

the temporary pulse condition setting unit obtains the transmittance change information and decides a trend of the transmittance change.

28. An optical information recording medium having a plurality of recording layers for recording, reproducing or erasing data by irradiating a laser beam from one side, wherein the medium stores a correction coefficient that indicates a difference of a laser beam transmittance of the recording layer between a recorded state and a non-recorded state.

29. The optical information recording medium according to claim 28, wherein the correction coefficient is stored in a lead-in area.

30. The optical information recording medium according to claim 28 or 29, wherein the correction coefficient is stored corresponding to

target recording layer information that specifies one of the plurality of recording layers of the optical information recording medium and

recording layer specifying information that specifies one of the recording layers closer to a laser beam incident side than the recording layer indicated by the target recording layer information.

31. The optical information recording medium according to any one of claims 28-30, wherein the medium further stores completed recording layer information for specifying a completed recording layer on which data is already recorded.

32. The optical information recording medium according to claim 31, wherein the completed recording layer information includes completed address information that indicates a position of the completed area on the completed recording layer.

33. An optical information recording medium having a plurality of recording layers for recording, reproducing or erasing data by irradiating a laser beam from one side, wherein the medium stores transmittance change information that indicates whether a laser beam transmittance increases or decreases when data is recorded on the recording layer.

34. An optical information recording medium having a plurality of recording layers for recording, reproducing or erasing data by irradiating a laser beam from one side, wherein the medium stores laser beam intensity information that indicates a maximum value of a laser beam intensity when data is recorded on at least one recording layer or that is used for calculating the maximum value.

Fig.1

Fig.2

*Fig.3*

*Fig.4*

**Fig.5**

S501 — start

S502 — teaching operation

S503 — calculate
effective pulse condtion

S504 — store
effective pulse condition

S505 — select
correction coefficient

S506 — record
user data on recording medium

S507 — record
completed recording layer
information on recording

Fig. 6

**Fig. 7**

Fig.8

laser beam intensity

Fig.9